(19) Europäisches Patentamt / European Patent Office / Office européen des brevets

(11) **EP 4 648 407 A1**

(12) **EUROPEAN PATENT APPLICATION**
published in accordance with Art. 153(4) EPC

(43) Date of publication:
**12.11.2025 Bulletin 2025/46**

(21) Application number: **24738696.4**

(22) Date of filing: **03.01.2024**

(51) International Patent Classification (IPC):
**H04N 19/11** (2014.01)   **H04N 19/593** (2014.01)
**H04N 19/70** (2014.01)

(52) Cooperative Patent Classification (CPC):
**H04N 19/11; H04N 19/593; H04N 19/70**

(86) International application number:
**PCT/KR2024/000095**

(87) International publication number:
**WO 2024/147626 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.01.2023 KR 20230000677**

(71) Applicant: **LG Electronics Inc.**
**Yeongdeungpo-gu**
**Seoul 07336 (KR)**

(72) Inventors:
• **LIM, Jaehyun**
**Seoul 06772 (KR)**
• **YOO, Sunmi**
**Seoul 06772 (KR)**
• **HONG, Myungoh**
**Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD BASED ON INTRA PREDICTION, METHOD FOR TRANSMITTING BITSTREAM, AND RECORDING MEDIUM STORING BITSTREAM**

(57)   An image encoding/decoding method and device are provided. An image decoding method according to the present disclosure may comprise the steps of: on the basis of intra prediction information of a luma component block of a current block, generating an intra prediction block of the luma component block; and restoring the current block on the basis of the intra prediction block, wherein the intra prediction information includes an intra prediction mode application flag indicating whether to apply a corresponding mode for each intra prediction mode, the intra prediction mode application flag includes a most probable mode (MPM) mode application flag and a template-based intra mode derivation (TIMD) mode application flag, and the MPM mode application flag is signaled before the TIMD mode application flag.

FIG.13

**Description**

[Technical Field]

The present disclosure relates to an image encoding/decoding method based on intra prediction, a method for transmitting a bitstream, and a recording medium storing a bitstream, and more specifically, relates to intra prediction mode-based image coding through reference sample restriction.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

In addition, the present disclosure is to efficiently change a signaling structure for an intra prediction mode based on importance information such as frequency for each intra prediction mode, etc. when intra encoding an image.

In addition, the present disclosure is to reduce the amount of information required to transmit an intra prediction mode with a higher probability of use.

In addition, the present disclosure is to increase the amount of information required to transmit an intra prediction mode with a low probability of use to improve intra prediction performance and increase compression efficiency.

The present disclosure is to provide a non-transitory computer-readable recording medium for storing a bitstream generated by the image encoding method or apparatus according to the present disclosure.

The present disclosure is to provide a non-transitory computer-readable recording medium for storing a bitstream which is received and decoded by the image decoding apparatus according to the present disclosure and used for image reconstruction.

The present disclosure is to provide a method for transmitting a bitstream which is generated by the image encoding method or apparatus according to the present disclosure.

The technical problems to be achieved in the present disclosure are not limited to the technical problems described above, and other technical problems not described may be clearly understood by those of ordinary skill in the art from the following descriptions.

[Technical Solution]

An image decoding method according to an aspect of the present disclosure includes based on intra prediction information of a luma component block of a current block, generating an intra prediction block of the luma component block and reconstructing the current block based on the intra prediction block, wherein an intra prediction mode application flag representing whether a corresponding mode is applied for each intra prediction mode is included in the intra prediction information, a most probable mode (MPM) mode application flag and a template-based intra mode derivation (TIMD) mode application flag are included in the intra prediction mode application flag, and the MPM mode application flag may be signaled before the TIMD mode application flag.

Meanwhile, according to an embodiment of the present disclosure, the intra prediction mode application flag further includes a grouping intra prediction mode flag representing whether an intra prediction mode within a mode group consisting of a specific intra prediction mode is applied, and the intra prediction mode application flag may be signaled based on the value of the grouping intra prediction mode flag.

Meanwhile, according to an embodiment of the present disclosure, a decoder-side derivation-based intra prediction mode may be included in the mode group.

Meanwhile, according to an embodiment of the present disclosure, a MRL mode or an ISP mode may be included in the decoder-side derivation-based intra prediction mode.

Meanwhile, according to an embodiment of the present disclosure, the TIMD mode application flag may be signaled based on the MPM mode application flag representing that a MPM mode is not applied.

Meanwhile, according to an embodiment of the present disclosure, the MPM mode application flag may be signaled before a decoder-side intra mode derivation (DIMD) mode application flag.

Meanwhile, according to an embodiment of the present disclosure, the DIMD mode application flag may be signaled based on the MPM mode application flag representing that a MPM mode is not applied.

Meanwhile, according to an embodiment of the present disclosure, an ISP mode application flag or an intraTMP mode application flag may not be included in the intra prediction mode application flag.

Meanwhile, according to an embodiment of the present disclosure, the MPM mode application flag may be signaled before a MIP mode application flag.

Meanwhile, according to an embodiment of the present disclosure, the MIP mode application flag may be signaled based on the MPM mode application flag representing that a MPM mode is not applied.

An image encoding method according to an embodiment of the present disclosure includes determining intra prediction information of a luma component block of a current block and encoding the intra prediction information into a bitstream, wherein an intra prediction mode application flag representing whether a corresponding mode is applied for each intra prediction mode is included in the intra prediction information, a most probable mode (MPM) mode application flag and a template-based intra mode derivation (TIMD) mode application flag are included in the intra prediction mode application flag, and the MPM mode application flag may be signaled before the TIMD mode application flag.

According to an embodiment of the present disclosure, as a method for transmitting a bitstream generated by an image encoding method, the image encoding method includes determining intra prediction information of a luma component block of a current block and encoding the intra prediction information into a bitstream, wherein an intra prediction mode application flag representing whether a corresponding mode is applied for each intra prediction mode is included in the intra prediction information, a most probable mode (MPM) mode application flag and a template-based intra mode derivation (TIMD) mode application flag are included in the intra prediction mode application flag, and the MPM mode application flag may be signaled before the TIMD mode application flag.

According to another embodiment of the present disclosure, a computer-readable recording medium may store a bitstream generated by the image encoding method or the image encoding apparatus of the present disclosure.

According to another embodiment of the present disclosure, a transmission method may transmit a bitstream generated by the image encoding apparatus or the image encoding method of the present disclosure.

The features of the present disclosure briefly summarized above are merely exemplary embodiments described in detail below and are not intended to limit the range of the present disclosure.

[Advantageous Effects]

According to the present disclosure, an image encoding/decoding method and apparatus with improved encoding/decoding efficiency may be provided.

In addition, according to the present disclosure, when intra encoding an image, a signaling structure for an intra prediction mode may be changed efficiently based on importance information such as frequency for each intra prediction mode, etc.

In addition, the present disclosure may reduce the amount of information required to transmit an intra prediction mode with a higher probability of use.

In addition, the present disclosure may increase the amount of information required to transmit an intra prediction mode with a low probability of use to improve intra prediction performance and increase compression efficiency.

According to the present disclosure, a non-transitory computer-readable recording medium for storing a bitstream generated by the image encoding method or apparatus according to the present disclosure may be provided.

According to the present disclosure, a non-transitory computer-readable recording medium for storing a bitstream which is received and decoded by the image decoding apparatus according to the present disclosure and used for image reconstruction may be provided.

According to the present disclosure, a method of transmitting a bitstream generated by the image encoding method or apparatus according to the present disclosure may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 shows a flowchart of an example of an intra prediction mode signaling method in an encoding apparatus.

FIG. 5 shows a flowchart of an example of an intra prediction mode determination method in a decoding apparatus.

FIG. 6 shows a diagram of an example of neighboring blocks used for deriving an MPM list.

FIG. 7 is a diagram showing an example of a template and a reference sample used in TIMD.

FIG. 8 is a diagram showing an example of a template area and a reference line of a TMRL mode.

FIG. 9 is a diagram showing an example of configuration information and an application example of a SGPM mode.

FIG. 10 is a diagram showing an example of blending performed at a SGPM mode boundary.

FIG. 11 is a diagram showing an example of a template area and a reference line of a TMRL mode.

FIG. 12 is a diagram showing an example of a structure for signaling information on whether an intra prediction mode is applied (e.g., an intra prediction mode application flag).

FIG. 13 is a diagram showing a signaling structure of intra prediction mode information according to an embodiment of the present disclosure.

FIG. 14 is a diagram showing a signaling structure of intra prediction mode information according to an embodiment of the present disclosure.

FIG. 15 is a diagram showing a signaling structure of intra prediction mode information according to an embodiment of the present disclosure.

FIG. 16 is a diagram showing a signaling structure of intra prediction mode information according to an embodiment of the present disclosure.

FIG. 17 is a diagram showing a signaling structure of intra prediction mode information according to an embodiment of the present disclosure.

FIG. 18 is a diagram showing a signaling structure of intra prediction mode information according to an embodiment of the present disclosure.

FIG. 19 is a diagram showing a signaling structure of intra prediction mode information according to an embodiment of the present disclosure.

FIG. 20 is a diagram showing a signaling structure of intra prediction mode information according to an embodiment of the present disclosure.

FIG. 21 is a diagram showing a signaling structure of intra prediction mode information according to an embodiment of the present disclosure.

FIG. 22 is a diagram showing a signaling structure of intra prediction mode information according to an embodiment of the present disclosure.

FIG. 23 is a diagram showing a signaling structure of intra prediction mode information according to an embodiment of the present disclosure.

FIG. 24 is a diagram showing a signaling structure of intra prediction mode information according to an embodiment of the present disclosure.

FIG. 25 is a diagram showing an image decoding method according to an embodiment of the present disclosure.

FIG. 26 is a diagram showing an image encoding method according to an embodiment of the present disclosure.

FIG. 27 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar drawing symbol have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an $M \times N$ block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

## Overview of the video coding system

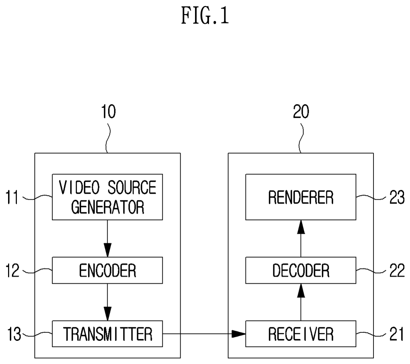

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

### Overview of the image encoding apparatus

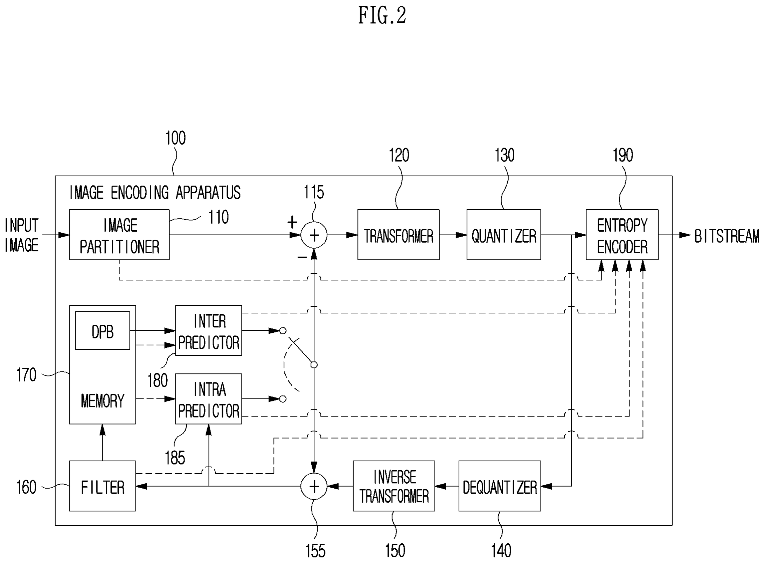

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc.

A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

## Overview of the image decoding apparatus

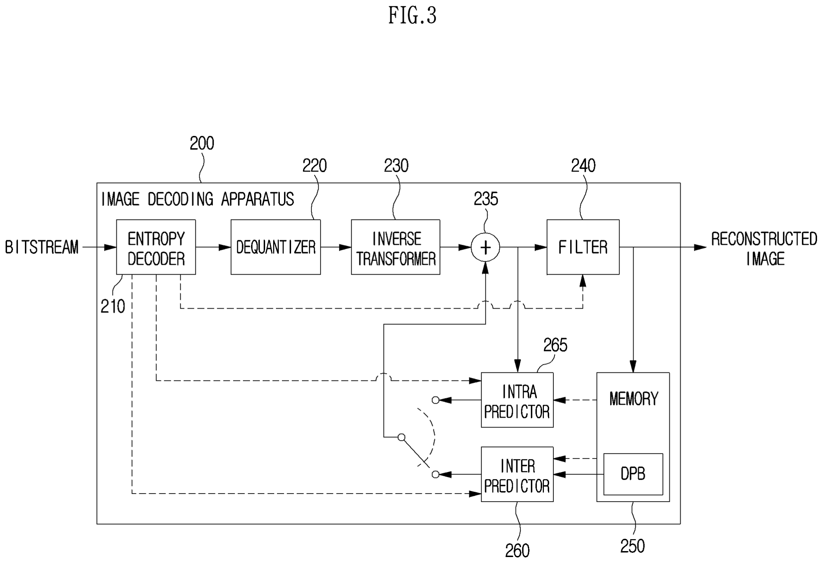

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

## Intra Prediction Mode/Type Determination

When intra prediction is applied, an intra prediction mode to be applied to a current block may be determined by using intra prediction mode of a neighboring block. For example, a decoding apparatus may select one of most probable mode (MPM) candidates within an MPM list, which is derived based on the intra prediction mode of a neighboring block (e.g., left and/or above neighboring block) of the current block and additional candidate modes, based on a received MPM index. Alternatively, one of remaining intra prediction modes, which are not included in the MPM candidates (and a planar mode), may be selected based on remaining intra prediction mode information. The MPM list may be configured to include or exclude the planar mode as a candidate. For example, when the MPM list includes the planar mode as a candidate, the MPM list may have six candidates, and when the MPM list excludes the planar mode as a candidate, the MPM list may have three candidates. When the MPM list excludes the planar mode as a candidate, a not planar flag (i.e., intra_luma_not_planar_flag) indicating whether the intra prediction mode of the current block is not the planar mode may be signaled. For example, an MPM flag may be signaled first, and the MPM index and the not planar flag may be signaled when the value of the MPM flag is 1. In addition, the MPM index may be signaled when the value of the not planar flag is 1. Here, the configuration in which the MPM list excludes the planar mode as a candidate does not mean that the planar mode is not considered as an MPM, but rather, since the planar mode is always considered as an MPM, the not planar flag is signaled first to determine whether the mode is the planar mode first.

For example, whether the intra prediction mode applied to the current block is among the MPM candidates (and the planar mode) or among the remaining mode may be indicated based on an MPM flag (e.g., intra_luma_mpm_flag). A value of 1 for the MPM flag may indicate that the intra prediction mode for the current block is within the MPM candidates (and the planar mode), and a value of 0 for the MPM flag may indicate that the intra prediction mode for the current block is not within the MPM candidates (and the planar mode). A value of 0 for the not planar flag (i.e., intra_luma_not_planar_flag) may indicate that the intra prediction mode for the current block is the planar mode, and a value of 1 for the not planar flag may indicate that the intra prediction mode for the current block is not the planar mode. The MPM index may be signaled in the form of a syntax element such as mpm_idx or intra_luma_mpm_idx, and the remaining intra prediction mode information may be signaled in the form of a syntax element such as rem_intra_luma_pred_mode or intra_luma_mpm_remainder. For example, the remaining intra prediction mode information may indicate one of the remaining intra prediction modes that are not included in the MPM candidates (and the planar mode), indexed in order of prediction mode numbers among all intra prediction modes. The intra prediction mode may be an intra prediction mode for a luma component (sample). Hereinafter, the intra prediction mode information may include at least one of the MPM flag (i.e., intra_luma_mpm_flag), the not planar flag (i.e., intra_luma_not_planar_flag), the MPM index (i.e., mpm_idx or intra_luma_mpm_idx), and the remaining intra prediction mode information (i.e., rem_intra_luma_pred_mode or intra_luma_mpm_remainder). In present disclosure, the MPM list may also be referred to by various terms such as MPM candidate list or candModeList. When MIP is applied to the current block, a separate MPM flag (i.e., intra_mip_mpm_flag), MPM index (i.e., intra_mip_mpm_idx), and remaining intra prediction mode information (i.e., intra_mip_mpm_remainder) for MIP may be signaled, and the not planar flag may not be signaled.

The intra prediction mode signaling procedure in the encoding apparatus and the intra prediction mode determination procedure in the decoding apparatus may be performed as an example below.

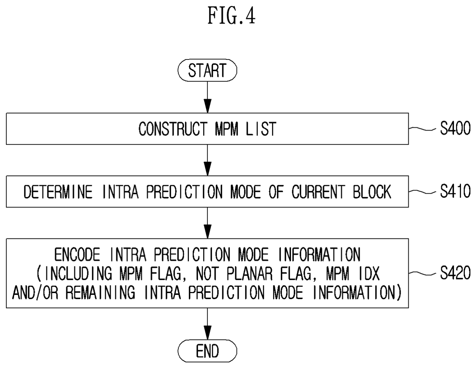

FIG. 4 shows a flowchart of an example of an intra prediction mode signaling method in an encoding apparatus.

Referring to FIG. 4, the encoding apparatus constructs an MPM list for a current block S400. The MPM list may include candidate intra prediction modes (MPM candidates) that have a high possibility of being applied to the current block. The MPM list may include intra prediction mode of a neighboring block, and may additionally include specific intra prediction modes according to a predetermined method. The specific method for configuring the MPM list will be described later.

The encoding apparatus determines an intra prediction mode of the current block S410. The encoding apparatus may perform prediction based on various intra prediction modes and may determine an optimal intra prediction mode based on rate-distortion optimization (RDO). In this case, the encoding apparatus may determine the optimal intra prediction mode by using only the MPM candidates included in the MPM list and the planar mode, or may determine the optimal intra prediction mode by additionally using the remaining intra prediction modes in addition to the MPM candidates included in the MPM list and the planar mode. Specifically, for example, when the intra prediction type of the current block is a specific type (i.e., LIP, MRL, or ISP) rather than a normal intra prediction type, the encoding apparatus may determine the optimal intra prediction mode by considering only the MPM candidates and the planar mode as the intra prediction mode candidates for the current block. In other words, in this case, the intra prediction mode for the current block may be determined only from among the MPM candidates and the planar mode, and the MPM flag may not be encoded/signaled in this case. The decoding apparatus, in this case, may estimate that the MPM flag is 1 without receiving the MPM flag separately.

Meanwhile, in general, when the intra prediction mode of the current block is not the planar mode and is one of the MPM candidates in the MPM list, the encoding apparatus generates an MPM index (mpm idx) indicating one of the MPM candidates. When the intra prediction mode of the current block is not included in the MPM list either, the encoding apparatus generates remaining intra prediction mode information that indicates a mode among the remaining intra prediction modes not included in the MPM list (and the planar mode), which is the same as the intra prediction mode of the current block.

The encoding apparatus may encode the intra prediction mode information and output it in the form of a bitstream. The intra prediction mode information may include the above-described MPM flag, not planar flag, MPM index, and/or remaining intra prediction mode information. In general, the MPM index and the remaining intra prediction mode information are in an alternative relationship and may not be signaled simultaneously for indicating the intra prediction mode of a block. In other words, the MPM flag value 1 may be signaled along with the not planar flag or the MPM index, and the MPM flag value 0 may be signaled along with the remaining intra prediction mode information. However, as described above, when a specific intra prediction type is applied to the current block, the MPM flag may not be signaled, and only the not planar flag and/or the MPM index may be signaled. In other words, in this case, the intra prediction mode information may include only the not planar flag and/or the MPM index.

The decoding apparatus may determine an intra prediction mode corresponding to the intra prediction mode information determined and signaled by the encoding apparatus.

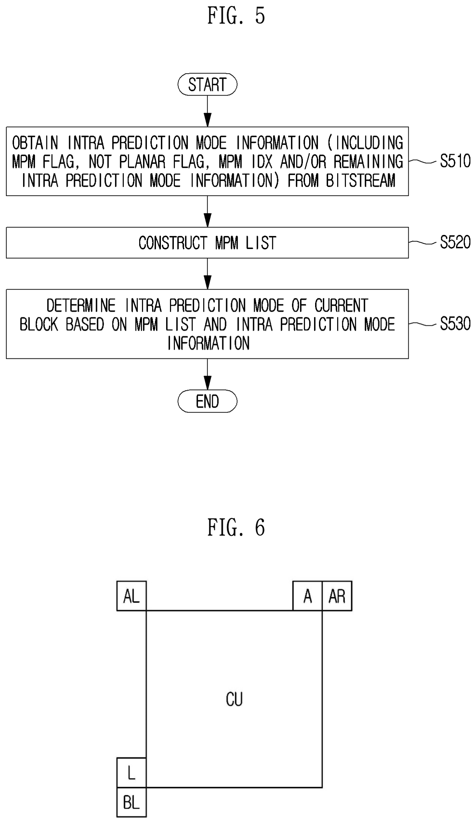

FIG. 5 shows a flowchart of an example of an intra prediction mode determination method in a decoding apparatus.

Referring to FIG. 5, the decoding apparatus obtains intra prediction mode information from a bitstream S500. The intra prediction mode information may include at least one of an MPM flag, a not planar flag, an MPM index, and remaining intra prediction mode, as described above.

The decoding apparatus constructs an MPM list S510. The MPM list is configured in the same manner as the MPM list configured by the encoding apparatus. In other words, the MPM list may include an intra prediction mode of a neighboring block and may further include specific intra prediction modes according to a predetermined method. The specific method for configuring the MPM list will be described later.

Although S510 is illustrated as being performed after S500, this is merely an example, and S510 may be performed before or simultaneously with S500.

The decoding apparatus determines an intra prediction mode of the current block based on the MPM list and the intra prediction mode information S520. As an example, when the value of the MPM flag is 1, the decoding apparatus may derive the planar mode as the intra prediction mode of the current block (based on the not planar flag), or may derive a candidate indicated by the MPM index among the MPM candidates in the MPM list as the intra prediction mode of the current block. In another example, when the value of the MPM flag is 0, the decoding apparatus may derive an intra prediction mode indicated by the remaining intra prediction mode information from among the remaining intra prediction modes not included in the MPM list and the planar mode as the intra prediction mode of the current block. Meanwhile, in another example, when the intra prediction type of the current block is a specific type (i.e., LIP, MRL, IST, etc.), the decoding apparatus may derive, without checking the MPM flag, the planar mode or a candidate indicated by the MPM index in the MPM list as the intra prediction mode of the current block.

For example, the not planar flag may be signaled when MRL is not applied to the current block (i.e., when intra_luma_ref_idx = 0), and the not planar flag may be omitted when MRL is applied to the current block (i.e., when intra_luma_ref_idx != 0). When the not planar flag is omitted, its value may be estimated as 1 by the decoding apparatus.

Meanwhile, intra prediction modes may include two directional intra prediction modes and 65 directional prediction modes. The non-directional intra prediction modes may include a planar intra prediction mode and a DC intra prediction mode, and the directional intra prediction modes may include intra prediction modes numbered from 2 to 66. The extended directional intra prediction mode may be applied to blocks of all sizes and may be applied to both luma and chroma components.

Meanwhile, in addition to the intra prediction modes described above, the intra prediction mode may further include a cross-component linear model (CCLM) mode for a chroma sample. The CCLM mode may be classified into LT_CCLM, L_CCLM, and T_CCLM depending on whether left samples, top samples, or both are considered for deriving a LM parameter, and it may be applied only to a chroma component.

The intra prediction modes, for example, may be indexed as shown in Table 1 below.

[Table 1]

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, and MIP, as described above. The intra prediction type may be indicated based on intra prediction type information, and the intra prediction type information may be implemented in various forms. As an example, the intra prediction type information may include intra prediction type index information indicating one of the intra prediction types. In another example, the intra prediction type information may include at least one of reference sample line information (i.e., intra_luma_ref_idx) indicating whether MRL is applied to the current block and, when applied, which reference sample line is used, an ISP flag (i.e., intra_subpartitions_mode_flag) indicating whether ISP is applied to the current block, ISP type information (i.e., intra_subpartitions_split_flag) indicating a split type of subpartitions when ISP is applied, a flag information indicating whether PDPC is applied, or a flag information indicating whether LIP is applied. In addition, the intra prediction type information may include an MIP flag (which may be referred to as intra_mip_flag) indicating whether MIP is applied to the current block.

Meanwhile, as described above, when MIP is applied to the current block (i.e., when the value of intra_mip_flag is 1), an MPM list for MIP may be separately configured, and the intra prediction mode information for MIP may include an MPM flag referred to as intra_mip_mpm_flag, an MPM index referred to as intra_mip_mpm_idx, and remaining intra prediction mode information referred to as intra_mip_mpm_remainder.

In addition, various prediction modes may be used for MIP, and a matrix and an offset for MIP may be derived based on the intra prediction mode for MIP. As described above, the matrix may be referred to as a (MIP) weight matrix, and the offset may be referred to as a (MIP) offset vector or a (MIP) bias vector. The number of intra prediction modes for MIP may be differently set based on the size of the current block. For example, i) when the height and width of the current block (i.e., CB or TB) are both 4, 35 intra prediction modes (i.e., intra prediction mode 0 to 34) may be available, ii) when both the height and width of the current block are equal to or less than 8, 19 intra prediction modes (i.e., intra prediction mode 0 to 18) may be available, iii) in other cases, 11 intra prediction modes (i.e., intra prediction mode 0 to 10) may be available. For example, when the height and width of the current block are both 4, it may be referred to as block size type 0, when both the height and width of the current block are equal to or less than 8, it may be referred to as block size type 1, and in other cases, it may be referred to as block size type 2, and the number of intra prediction modes for MIP may be organized in the following table. However, this is merely an example, and the block size type and the number of available intra prediction modes may be changed. In the present disclosure, the intra prediction mode for MIP may be referred to as an MIP intra prediction mode, an MIP prediction mode, or an MIP mode.

[Table 2]

| block size type (MipSizeId) | number of MIP intra prediction modes | MIP intra prediction mode |
|---|---|---|
| 0 | 35 | 0...34 |
| 1 | 19 | 0...18 |

(continued)

| block size type (MipSizeId) | number of MIP intra prediction modes | MIP intra prediction mode |
|---|---|---|
| 2 | 11 | 0...10 |

Meanwhile, in an enhanced compression model (ECM), a secondary MPM list has been introduced. The conventional primary MPM (PMPM) list includes six entries, and the secondary MPM (SMPM) list includes sixteen entries. First, a general MPM list having twenty-two entries is configured, and the first six entries in the general MPM list are included in the PMPM list, while the remaining entries are included in the SMPM list. The first entry in the general MPM list is a planar mode, and the remaining entries are composed of intra modes of neighboring blocks on the left (L), above (A), below-left (BL), above-right (AR), and above-left (AL), directional modes to which offsets are added from the first two available directional modes of the neighboring blocks, and a default mode, as described in FIG. 6.

When a CU block is in a vertical direction, the order of neighboring blocks may be above (A), left (L), below-left (BL), above-right (AR), and above-left (AL). Otherwise, the order may be left (L), above (A), below-left (BL), above-right (AR), and above-left (AL).

A PMPM flag is parsed, and when its value is 1, a PMPM index may be parsed to determine which entry in the PMPM list is selected. Otherwise, an SPMPM flag may be parsed to determine whether to parse an SPMPM index or remaining modes.

## Neighboring Reference Sample Derivation

When intra prediction is applied to a current block, neighboring reference samples to be used for intra prediction of a current block may be derived. The neighboring reference samples of the current block may include a total of $2 \times nH$ samples adjacent to the left boundary and neighboring the bottom-left of a $nW \times nH$-sized current block, a total of $2 \times nW$ samples adjacent to the top boundary and neighboring the top-right of a current block and one sample neighboring the top-left of a current block. Alternatively, the neighboring reference samples of the current block may include top neighboring samples of a plurality of columns and left neighboring samples of a plurality of rows. In addition, the neighboring reference samples of the current block may include a total of nH samples adjacent to the right boundary of a nWxnH-sized current block, a total of nW samples adjacent to the bottom boundary of a current block, and one sample neighboring the bottom-right of a current block.

Meanwhile, when a MRL described below is applied, reference samples may be located on lines 1 to 3, not line 0 adjacent to a current block on the left/top, and in this case, the number of neighboring reference samples may increase further. The area and number of specific neighboring reference samples are described below.

Meanwhile, when ISP described below is applied, the neighboring reference samples may be derived in the unit of a sub-partition.

Some of the neighboring reference samples of a current block may not be decoded yet, or may not be available. In this case, a decoder may configure neighboring reference samples to be used for prediction through interpolation of available samples.

Some of the neighboring reference samples of a current block may not be decoded yet, or may not be available. In this case, a decoder may configure neighboring reference samples to be used for prediction through extrapolation of available samples. Until reaching a top-right reference sample starting from the bottom-left, they may be configured by substituting or padding a pixel that is not decoded yet or that is unavailable with the last available sample while updating a referenceable sample into the latest sample (the last available sample).

## Intra Prediction Mode/Type based Prediction Sample Derivation

A predictor of an encoding apparatus/decoding apparatus may derive a reference sample from an intra prediction mode of a current block among neighboring reference samples of a current block, and may generate a prediction sample of the current block based on the reference sample.

For example, (i) a prediction sample may be derived based on an average or interpolation of neighboring reference samples of a current block, and (ii) the prediction sample may be derived based on a reference sample located in a specific (prediction) direction among the neighboring reference samples of the current block. Case (i) may be referred to as a non-directional mode or a non-angular mode, and case (ii) may be referred to as a directional mode or an angular mode. In addition, the prediction sample may be generated by interpolation between a first neighboring sample and a second neighboring sample, the second neighboring sample being located in a direction opposite to the prediction direction of the intra prediction mode of the current block with respect to the prediction sample of the current block among the neighboring reference samples. The above-described case may be referred to as linear interpolation intra prediction (LIP). Additionally, a temporary prediction sample of the current block may be derived based on filtered neighboring reference samples, and a prediction sample of the current block may be derived by performing a weighted sum of the temporary prediction sample and at least one reference sample, derived by the intra prediction mode, among the conventional neighboring reference samples, in other words, unfiltered neighboring reference samples. The above-described case may be referred to as position dependent intra prediction (PDPC). In addition, among neighboring multiple reference sample line of the current block, a reference sample line with the highest prediction accuracy may be selected, and a prediction sample may be derived by using a reference sample located in the prediction direction on the selected line, and in this case, the intra prediction encoding may be performed by signaling the used reference sample line to the decoding apparatus. The above-described case may be referred to as multi-reference line intra prediction (MRL) or MRL-based intra prediction. Additionally, the current block may be divided into vertical or horizontal subpartitions, and intra prediction may be performed based on the same intra prediction mode, while neighboring reference samples may be derived and used in the subpartition unit. In this case, the intra prediction mode of a current block is applied in the same manner to the subpartitions, intra prediction performance may be improved by deriving and using a neighboring reference sample in the subpartition unit. This prediction method may be referred to as intra sub-partitions (IPS) or IPS-based intra prediction. Detailed description will be described later. In addition, when a prediction direction based on a prediction sample points the position between the neighboring reference samples, in other words, when the prediction direction points to a fractional sample position, a value of the prediction sample may be derived through interpolation of a plurality of reference samples located around the corresponding prediction direction (i.e., corresponding fractional sample position neighbor).

The above-described intra prediction methods may be referred to as intra prediction type, distinguished from intra prediction mode. The intra prediction type may also be referred to by various terms such as intra prediction technique or additional intra prediction mode. For example, the intra prediction type (or additional intra prediction mode, etc.) may include at least one of the above-described LIP, PDPC, MRL, or ISP. Information on the intra prediction type may be encoded by an encoding apparatus and included in a bitstream to be signaled to a decoding apparatus. The information on the intra prediction type may be implemented in various forms, such as flag information indicating whether each intra prediction type is applied, or index information indicating one of intra prediction type among multiple intra prediction types.

The MPM list for deriving the above-described intra prediction mode may be configured differently according to the intra prediction type. Alternatively, the MPM list may be commonly configured regardless of the intra prediction type.

## Neighboring Reference Sample Derivation

When intra prediction is applied to a current block, neighboring reference samples to be used for intra prediction of a current block may be derived. The neighboring reference samples of the current block may include a total of $2 \times nH$ samples adjacent to the left boundary and neighboring the bottom-left of a $nW \times nH$-sized current block, a total of $2 \times nW$ samples adjacent to the top boundary and neighboring the top-right of a current block and one sample neighboring the top-left of a current block. Alternatively, the neighboring reference samples of the current block may include top neighboring samples of a plurality of columns and left neighboring samples of a plurality of rows. In addition, the neighboring reference samples of the current block may include a total of nH samples adjacent to the right boundary of a nWxnH-sized current block, a total of nW samples adjacent to the bottom boundary of a current block, and one sample neighboring the bottom-right of a current block.

Meanwhile, when a multiple reference line (MRL) is applied, reference samples may be located on lines 1 to 3, not line 0 adjacent to a current block on the left/top, and in this case, the number of neighboring reference samples may increase further. The area and number of specific neighboring reference samples are described below.

Meanwhile, when intra sub-partitions (ISP) is applied, the neighboring reference samples may be derived in the unit of a sub-partition.

## DIMD(Decoder side intra mode derivation)

In DIMD, intra prediction may be derived as a weighted average of a planar and two derived directions. To achieve this, two angular modes may be selected from a Histogram of Gradient (HoG) calculated from neighboring pixels of the current block. When the two modes are selected, their predictors (prediction blocks) and a planar predictor may be normally calculated, and the corresponding weighted average may be used as the final predictor (the final prediction block) of a current block. In this case, to determine the weight, the corresponding amplitude in the HoG may be used for each of the two modes.

Since the derived intra modes are included in the primary list of an intra MPM, the DIMD process may be performed before the MPM list is configured. The primary derived intra mode of a DIMD block may be stored together with the block and may be used for configuring MPM list of neighboring blocks.

In the DIMD chroma mode, the DIMD derivation method may be used to derive a chroma intra prediction mode of the current block based on pre-reconstructed neighboring Y, Cb, and Cr samples in the second neighboring row and column. Specifically, in order to build the HoG, horizontal gradient and vertical gradient may be calculated not only for the pre-reconstructed Cb and Cr samples but also for each collocated pre-reconstructed luma sample of the current chroma block. Then, chroma intra prediction for the current chroma block may be performed using the intra prediction mode with the highest histogram amplitude.

When the intra prediction mode derived from the DIMD chroma mode is the same as the intra prediction mode derived from the DM mode, the intra prediction mode with the second-highest histogram amplitude may be used as the DIMD chroma mode. To indicate whether the above-described DIMD chroma mode is applied, a predetermined CU-level flag may be signaled.

**TIMD(Fusion for template-based intra mode derivation)**

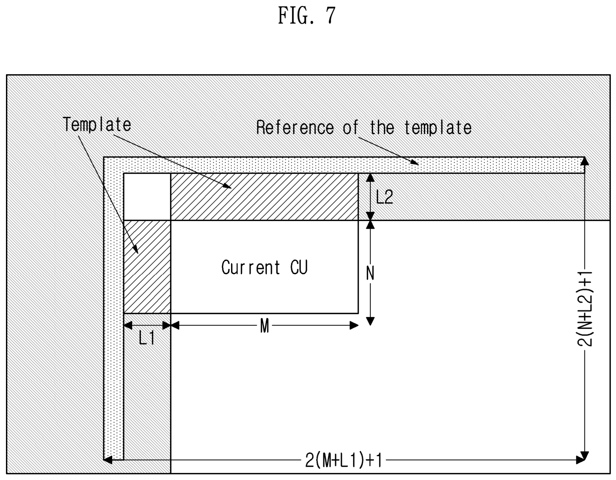

When the two modes are selected, their predictors (prediction blocks) and a planar predictor may be normally calculated, and the corresponding weighted average may be used as the final predictor (the final prediction block) of a current block. For the IPM intra mode of a neighboring adjacent intra block and inter block, as in FIG. 7, after calculating the sum of absolute transformed difference (SATD) between a prediction block predicted from a template area and an actual reconstructed sample, a mode with the smallest SATD may be selected as the intra mode of a current block. FIG. 7 is a diagram showing an example of a template and a reference sample used in TIMD.

For each intra prediction mode in the MPM, the SATD between the prediction sample of a template and the reconstructed sample may be calculated. Then, the first two intra prediction modes with the smallest SATD may be selected as TIMD modes. These two TIMD modes may be fused, i.e., blended according to a weight, and such weighted intra prediction may be used for coding the current CU. The derivation of the TIMD mode may include the above-described Position Dependent Intra Prediction Combination (PDPC).

The cost of the two selected modes may be compared with a predetermined threshold, and a cost factor 2 may be applied as shown in Equation 1 below.

$$[\text{Equation 1}]$$
$$costMode2 < 2 * costMode1$$

When the condition of Equation 1 is true, the above-described fusion may be applied. In contrast, when the condition of Equation 1 is false, only mode 1 may be used.

Meanwhile, the weight of the modes may be calculated from their respective SATD costs as shown in Equation 2 below.

$$[\text{Equation 2}]$$
$$weight1 = costMode2/(costMode1 + costMode2)$$
$$weight2 = 1 - weight1$$

**Intra Prediction Fusion**

An intra prediction method derives prediction samples by the weight combination of multiple predictors (prediction blocks) generated from a different reference line. In this process, multiple intra predictors are generated and fused through weighted average. The process of deriving a predictor to be used in a fusion process is as follows.

1. For a directional intra prediction mode including the single mode of TIMD and DIMD, a proposed method derives intra prediction with a weight obtained from multiple reference lines represented as $p_{fusion} = w_0 p_{line} + w_1 p_{line+1}$. Here, $p_{line}$ is intra prediction obtained from a default reference line, and $p_{line+1}$ is prediction obtained from a line above a default reference line. Weight $w_0$ is configured as 3/4, and $w_1$ is configured as 1/4.

2. For a TIMD mode performing blending, $p_{line}$ is used for the first mode (weight $w_0$ is 1, $w_1$ is 0), and $p_{line+1}$ is used for the second mode (weight $w_0$ is 0, $w_1$ is 1).

3. For a DIMD mode performing blending, the number of predictors (prediction blocks) used for weighted average is increased from 3 to 6.

An intra prediction fusion method is applied to a luma block when a directional intra prediction mode (an angular intra mode) has a non-integer gradient (reference sample interpolation is essential) and a block size is greater than 16, and is used with a MRL, but is not applied to an ISP-coded block. In addition, PDPC is applied to an intra prediction mode by using what is closest to a current block reference line.

### TMRL(Template-based Multiple Reference Line intra prediction)

A TMRL mode determines the combination of an intra prediction mode to be applied and the position of a neighboring reference line based on a current block in the form of an index, and selects a candidate with a higher probability of application based on template matching.

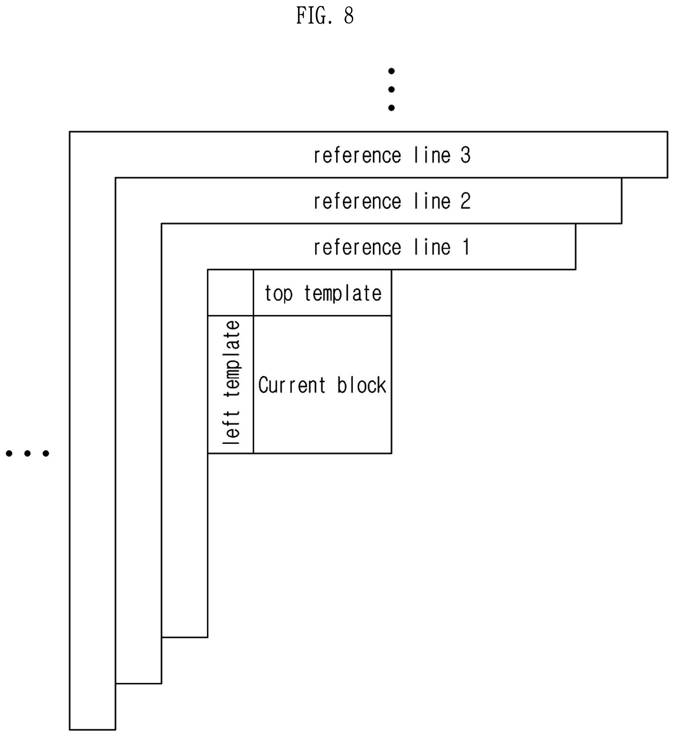

FIG. 8 is a diagram showing an example of a template area and a reference line of a TMRL mode. As in FIG. 8, 50 candidates are generated through combination with an intra prediction mode obtained in a method that is pre-defined from a plurality of neighboring reference lines (5 reference lines x 10 intra prediction mode candidates), and the SAD between a pixel reconstructed for a template area located on a reference line adjacent to a current block and a prediction pixel generated through the 50 candidates is calculated to select 20 candidates by ordering them in ascending order of their value (i.e., 20 with a small SAD value are selected).

An encoder and a decoder may determine and use a reference line and a prediction mode indicated by which candidate through index transmission for the selected 20 candidates.

### SGPM(Spatial Geometric Partitioning Mode)

A SGPM mode is a method of performing prediction in a form in which two prediction blocks are merged based on two intra prediction modes and one partition direction information within the same block.

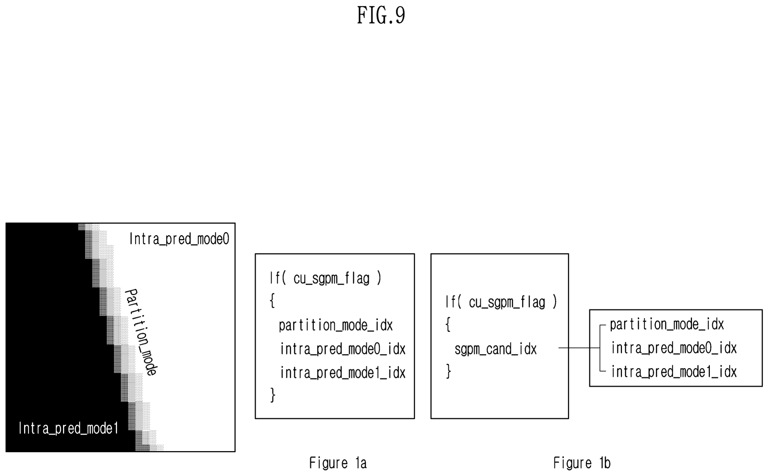

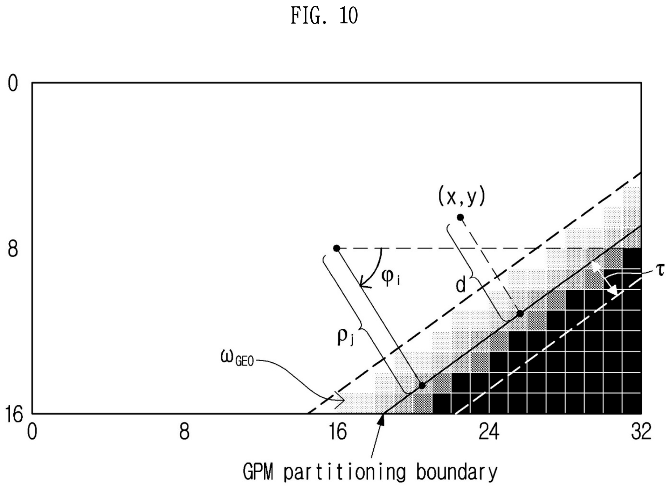

FIG. 9 is a diagram showing an example of configuration information and an application example of a SGPM mode, and FIG. 10 is a diagram showing an example of blending performed at a SGPM mode boundary. As in FIG. 9, by transmitting one integrated index information (sgpm_cand_idx), an encoder and a decoder may determine and use two intra prediction modes and one partition direction information. In addition, as in FIG. 10, blending between prediction areas may be performed to reduce image quality deterioration and compression efficiency reduction that may be caused by boundary line generation due to discontinuity at a boundary where two intra prediction modes meet, and the width ($\tau$) of a blended area may be adaptively determined according to a block size.

### intraTMP(Intra Template Matching Prediction)

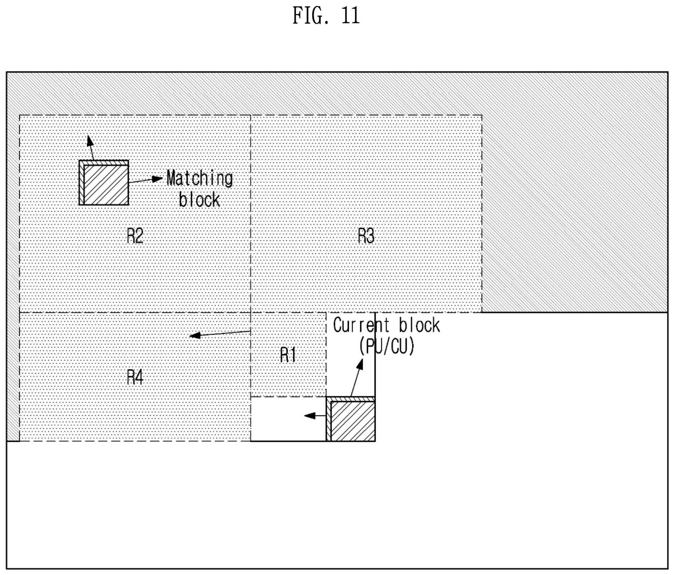

FIG. 11 is a diagram showing an example of a template area and a reference line of a TMRL mode. An IntraTMP mode is a method in which the adjacent area of a current block where prediction will be performed is designated as a template as in FIG. 11, and when there is an arbitrary block of the same size as a current block obtained within a search range composed of neighboring reconstructed pixels existing in the same picture, a block that minimizes an error between the template of a corresponding block and the template of a current block is found and used as the prediction block of a current block.

In the process of signaling a detailed technology configuring the video compression standard, it may be efficient in terms of compression performance to allocate less information to a technology with a relatively high selection ratio and more information to a technology with a relatively low selection ratio. Intra prediction within ECM, which is a pre-standardization model for the future standard Post-VVC, is improving compression performance by introducing many new modes that did not exist in the existing VVC. However, as the ECM entry of each mode occurs sequentially, it shows different statistical characteristics from the perspective of intra prediction modes configuring VVC and their selection ratio, and optimization considering the selection ratio from the perspective of the entire configuration mode is not performed, so compression performance may be reduced.

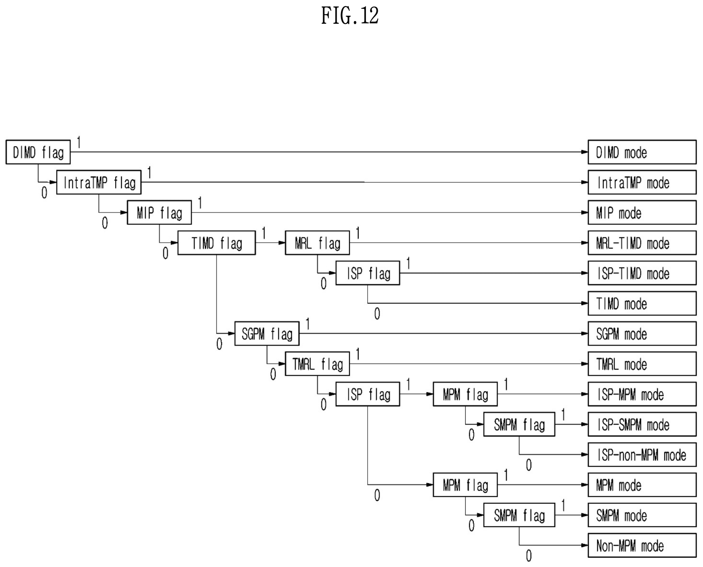

FIG. 12 is a diagram showing an example of a structure for signaling information on whether an intra prediction mode is applied to a luma component (e.g., an intra prediction mode application flag). The example of the selection ratio, i.e., the frequency of use, of an intra prediction mode disclosed in FIG. 12 may be as follows.

[Table 3]

| mode | Selection ratio (%) |
|------|---------------------|
| MPM  | 23.8 |
| TIMD | 20.9 |
| DIMD | 12.7 |
| MIP  | 12.2 |
| TMRL | 8.2 |

(continued)

| mode | Selection ratio (%) |
|---|---|
| SGPM | 7.9 |
| SMPM | 3.8 |
| Non-MPM | 2.8 |
| MRL-TIMD | 2.4 |
| ISP-MPM | 1.9 |
| intraTMP | 1.5 |
| ISP-TIMD | 1.3 |
| ISP-SMPM | 0.4 |
| ISP-non-MPM | 0.3 |

Including FIG. 12, an intra prediction mode abbreviated in the present disclosure is as follows. The following intra prediction mode is based on the above-described contents.

- MPM: A prediction mode derived through a most probable mode (MPM) flag and a MPM index
- SMPM: A Secondary MPM mode
- Non-MPM: A remaining intra prediction mode
- ISP-MPM: A mode that applies a MPM mode based on sub-partition
- ISP-SMPM: A mode that applies a SMPM mode based on sub-partition
- ISP-non-MPM: A mode that applies a Non-MPM mode based on sub-partition
- TIMD: A mode derived by a TIMD method
- MRL-TIMD: A mode derived by a TIMD method by utilizing multiple reference lines
- ISP-TIMD: A mode that applies a TIMD mode based on sub-partition
- DIMD: A mode derived by a DIMD method
- MIP: A mode derived by a MIP method
- TMRL: A mode derived by a TMRL method
- SGPM: A mode derived by a SGPM method
- intraTMP: A mode derived by an intraTMP method

Table 3 above may show that MPM, TIMD, DIMD and MIP show a relatively high selection ratio, and a prediction mode, etc. combined with intraTMP and ISP methods shows a relatively low selection ratio.

Generally, when signaling is performed by allocating less information to a mode with a relatively high selection ratio and allocating more information to a mode with a relatively low selection ratio, compression efficiency may be improved. Accordingly, the present disclosure proposes a method for reconfiguring the signaling order and structure for each prediction mode included in FIG. 12 according to a selection ratio for each mode indicated in Table 3 through various embodiments.

In addition, the present disclosure proposes a method for improving encoding efficiency by reconfiguring the signaling order and structure of information for a prediction mode by considering a selection ratio for each intra prediction mode configuring ECM through various embodiments. In addition, a method is proposed that minimizes information transmission in parallel with this and groups modes derived based on a decoder-side derivation method to merge them with the reconfigured signaling order/structure proposed in an embodiment of the present disclosure. Additionally, a method for optimally signaling the remaining modes excluding a specific mode with a low selection ratio among the intra prediction modes is proposed as an embodiment of the present disclosure.

According to various embodiments of the present disclosure, an optimal signaling structure is proposed that considers the occurrence frequency and statistical characteristics of each intra prediction mode, enhancing inter prediction performance and improving compression efficiency.

Meanwhile, when the embodiment of the present disclosure is described below, it is described based on a prediction mode selection ratio in Table 3, but it is for the clarity of the description and the present disclosure is not limited thereto. In other words, a prediction mode selection ratio may be different.

Meanwhile, when the embodiment of the present disclosure is described below, intra prediction information may have the same meaning as intra prediction mode information, and intra prediction mode information may include information on whether an intra prediction mode is applied, i.e., intra prediction mode application information.

Meanwhile, when the embodiment of the present disclosure is described below, information referred to as a combination of the name of a specific mode and a flag (e.g., a MPM flag, etc.) may be information on whether a corresponding specific mode is applied. In other words, it may represent a corresponding specific mode application flag.

Hereinafter, the embodiment of the present disclosure will be described in detail by referring to drawings.

## Embodiment #1

According to an embodiment of the present disclosure, signaling of intra prediction mode information may be performed in different order than before. As an example, signaling order may be determined by considering the frequency of use of an intra prediction mode. Based on a selection ratio shown in Table 3 above, signaling of intra prediction mode information such as MPM, TIMD, DIMD, MIP, etc. with a relatively high selection ratio may be performed in preference to signaling of other prediction modes. As an example, signaling of intra prediction mode information may relate to a luma component (a luma component).

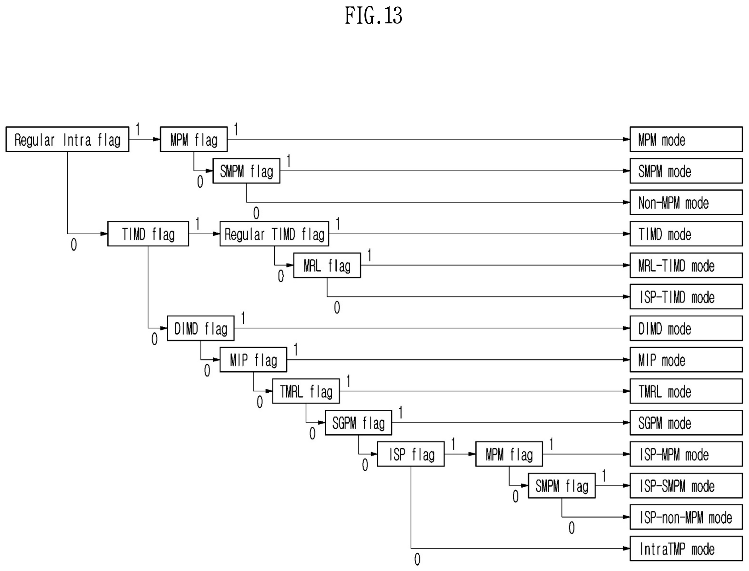

FIG. 13 is a diagram showing a signaling structure of intra prediction mode information according to an embodiment of the present disclosure.

According to FIG. 13, intra prediction mode information for a luma component (e.g., an intra prediction mode application flag representing whether an intra prediction mode is applied) may be signaled. As an example, based on Table 3, in order to preferentially signal information on a MPM mode with a relatively high selection ratio and SMPM and non-MPM modes with a high association with a MPM mode during an intra prediction mode configuration process (e.g., an intra prediction mode application flag) among the intra prediction modes compared to other prediction mode information, some intra prediction modes with high selection frequency may be grouped. In other words, at least two intra prediction modes may be grouped by using selection frequency, and grouping intra prediction mode information (a grouping intra prediction mode application flag, a grouping intra prediction flag, etc.) representing whether a specific intra prediction mode within a corresponding group is applied may be preferentially signaled. As an example, grouping intra prediction mode information may be referred to as a regular intra flag. When the value of a regular intra flag is a specific value (e.g., 1, true), an intra prediction mode application flag within a corresponding group may be signaled. For example, when a regular intra flag is 1, a MPM flag representing whether a MPM mode is applied, a SMPM flag representing whether a SMPM mode is applied, etc. may be obtained sequentially, and through this, a MPM, SMPM or Non-MPM mode may be applied to a current block. Meanwhile, as another example, when the value of a regular intra flag is a specific value (e.g., 0, false), only an intra prediction mode application flag other than a corresponding group may be signaled. For example, a TIMD flag, which is application information for a TIMD mode with a higher selection ratio after a MPM mode, may be signaled, and a regular TIMD flag and a MRL flag may be separately signaled to distinguish between MRL-TIMD and ISP-TIMD modes with a high association with a TIMD mode.

As an example, when the value of a TIMD flag is a specific value (e.g., 0, false), information on whether DIMD, MIP, TMRL and SGPM modes with a higher selection ratio after MPM and TIMD modes are applied, i.e., an application flag for each prediction mode, may be signaled. In this case, a DIMD flag, a MIP flag, a TMRL flag and a SGPM flag may be signaled sequentially.

As an example, when the value of a SGPM flag is a specific value (e.g., 0, false), a ISP flag may be used to determine whether a sub-partition-based MPM, SMPM, Non-MPM mode or IntraTMP mode is applied, and when the value of an ISP flag is a specific value (e.g., 1, true), a MPM flag and a SMPM flag may be sequentially signaled to determine which mode among the ISP-MPM, ISP-SMPM and ISP-non-MPM modes is applied.

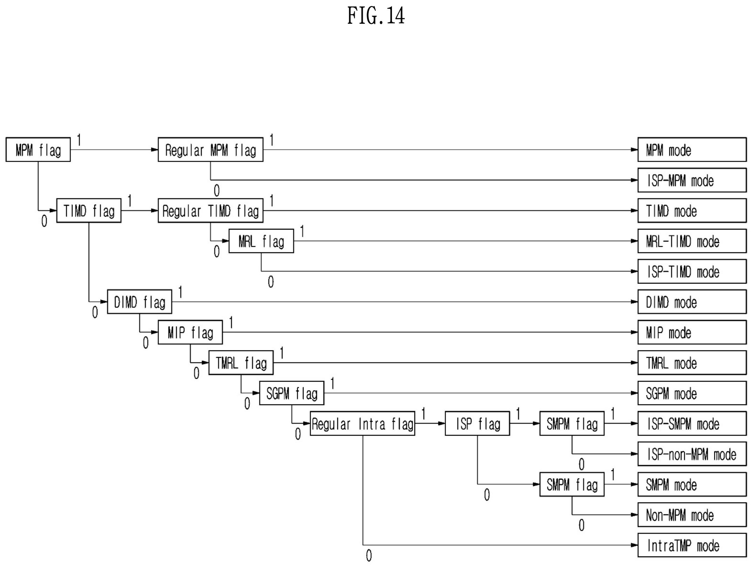

As another example, the signaling structure of intra prediction mode information as in FIGS. 14 to 16 other than FIG. 13 may be used. FIGS. 14 to 16 are a diagram showing a signaling structure of intra prediction mode information according to an embodiment of the present disclosure.

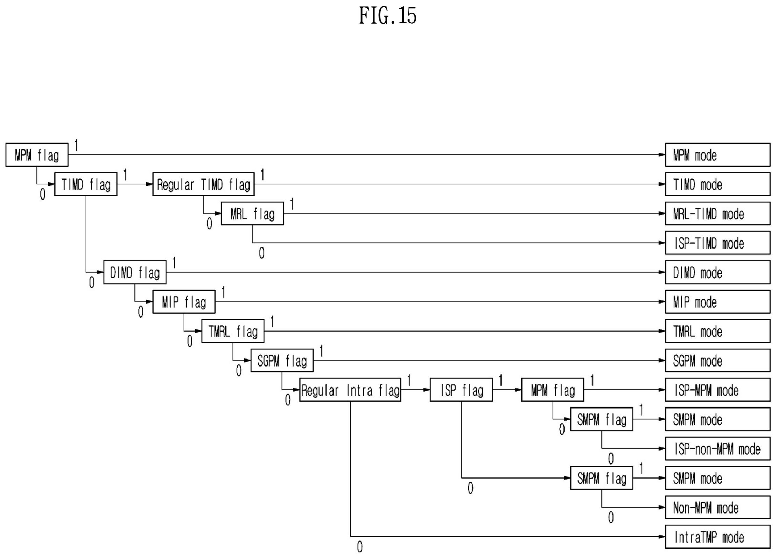

According to an embodiment of FIGS. 14 and 15, a structure may be used that information on a MPM mode with the highest selection ratio among the intra prediction modes for a luma component according to Table 3 is preferentially signaled. As an example, in FIG. 14, in order to preferentially signal information on a MPM mode and a sub-partition-based MPM mode, which of a MPM mode or an ISP-MPM mode is applied may be distinguished through a regular MPM flag after a MPM flag is signaled. In this case, up to information on a SGPM mode may be signaled in the same manner as in FIG. 13 for a case where the value of a MPM flag is a specific value (e.g., 0, false), and a regular intra flag may be used to distinguish an IntraTMP mode from other residual modes. Afterwards, an ISP flag and a SMPM flag may be signaled sequentially for a case where a regular intra flag is a specific value (e.g., 1, true), through which, ISP-SMPM, ISP-non-MPM, SMPM and Non-MPM modes may be distinguished. According to FIG. 15, information on a MPM mode (a MPM flag) with the highest selection ratio among the intra prediction modes for a luma component may be separated alone and signaled first. As an example, after up to a regular intra flag is signaled in the same manner as in FIG. 14 for a case where a MPM flag is a specific value (e.g., 0, false), when a regular intra flag is a specific value (e.g., 1, true), an ISP flag, a MPM flag and a SMPM flag may be signaled sequentially, through which ISP-MPM, ISP-SMPM, ISP-non-MPM, SMPM and Non-MPM modes may be distinguished.

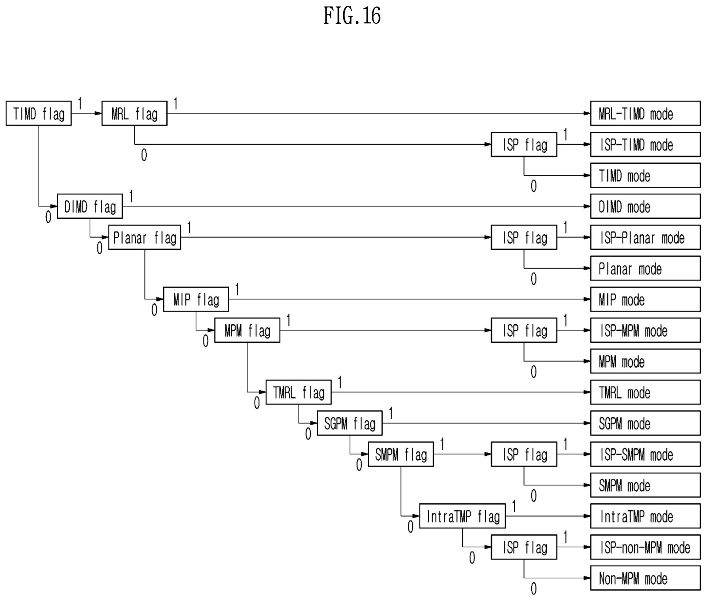

As another example, the signaling structure of intra prediction mode information as in FIG. 16 may be used. According to FIG. 16, a specific intra prediction mode with a high selection ratio according to Table 3 may be separated from other intra prediction modes and signaled preferentially. FIG. 16 is a diagram for an example in which a planar flag (a planar application mode flag) is used to signal a planar mode with the highest selection ratio among the intra prediction modes in relative preference to other modes. Considering the selection ratio of a planar mode corresponding to about 1/2 of the modes selected as MPM, a planar flag may be signaled as separate information after the signaling of information on TIMD and DIMD modes with a higher selection ratio than a planar mode. As an example, a MPM flag may be signaled subsequently when the value of a planar flag is a specific value (e.g., 0, false), and a MPM mode, not a planar mode, may be applied. Similarly, whether the remaining modes excluding a planar mode are applied may be determined by a SMPM mode, a Non-MPM mode, an ISP-SMPM mode, an ISP-non-MPM mode, etc. which are distinguished through a SMPM flag, an ISP flag, etc. which are signaled subsequently when the value of a planar flag is a specific value (e.g., 0, false).

Meanwhile, in the example of FIG. 16, a planar flag is signaled after the signaling of a DIMD flag, and a MIP flag and a MPM flag are signaled thereafter, but this corresponds to an embodiment of the present disclosure, so the present disclosure is not limited thereto. In other words, when whether a planar mode is applied may be signaled separately through a planar flag, there is no limitation on the signaling order of planar flags and flags for other modes. In other words, signaling may also be performed in the order of a planar flag - a MPM flag - a MIP flag or a MPM flag - a planar flag - a MIP flag, etc., and a flag in other modes may be signaled in any order other than this, which is also included in the embodiment of the present disclosure.

In addition, other than a planar mode used as the example, information on any intra prediction mode may be signaled independently and preferentially according to a selection ratio. For example, when the selection ratio of a DC mode is high, a DC mode application flag may be signaled as separate information like a planar flag in FIG. 16.

In addition, in FIG. 16, when the value of a TIMD flag is a specific value (e.g., 1, true), the signaling structure of information on a flag signaled subsequently and TIMD-linked modes branched through it borrows the structure of FIG. 12, but it also corresponds to an embodiment of the present disclosure, so it is not limited thereto, and the signaling structure of FIG. 13, etc. may be used.

In this way, compression efficiency may be improved by allocating relatively less information to a mode that occurs more frequently by rearranging an intra prediction mode for a luma component so that signaling is performed first in order of high selection ratio based on that ratio.

## Embodiment #2

According to an embodiment of the present disclosure, specific intra prediction modes may be grouped into a mode group and information on whether they are applied to a mode group may be signaled. According to TIMD, DIMD, MRL-TIMD and ISP-TIMD modes described above, a detailed mode may be determined by a derivation method defined for each mode in a decoder without signaling separate information on a detailed mode included in a corresponding mode. In this embodiment, information on a (decoder-side) derivation-based mode may be signaled more efficiently by grouping and signaling the decoder-side derivation-based modes distinguished from other intra prediction modes, and the signaling of information on other intra prediction modes other than a derivation-based mode may be reduced.

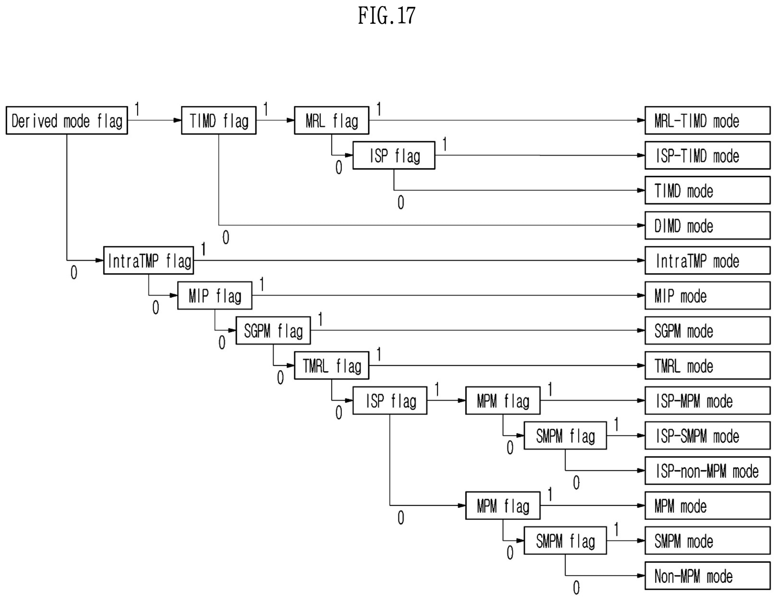

FIGS. 17 to 18 are a diagram showing a signaling structure of intra prediction mode information according to an embodiment of the present disclosure. As an example, FIG. 17 is an example in which decoder-side derivation-based modes are grouped and signaled based on the signaling structure of FIG. 12.

According to an embodiment of the present disclosure, a grouping intra prediction mode flag may be used so that decoder-side derivation-based modes with a relatively high selection ratio may be grouped and signaled first. As an example, a derived mode flag, etc. may be included in a grouping intra prediction mode flag. As an example, when the value of a derived mode flag is a specific value (e.g., 1, true), a TIMD flag, a MRL flag and an ISP flag may be signaled, through which it may be determined whether MRL-TIMD, ISP-TIMD, TIMD and DIMD modes included in a decoder-side derivation-based mode are applied.

Meanwhile, as an example, when a derived mode flag is a specific value (e.g., 0, false), information on the remaining modes excluding decoder-side derivation-based modes may be signaled by maintaining the structure of FIG. 12 as it is.

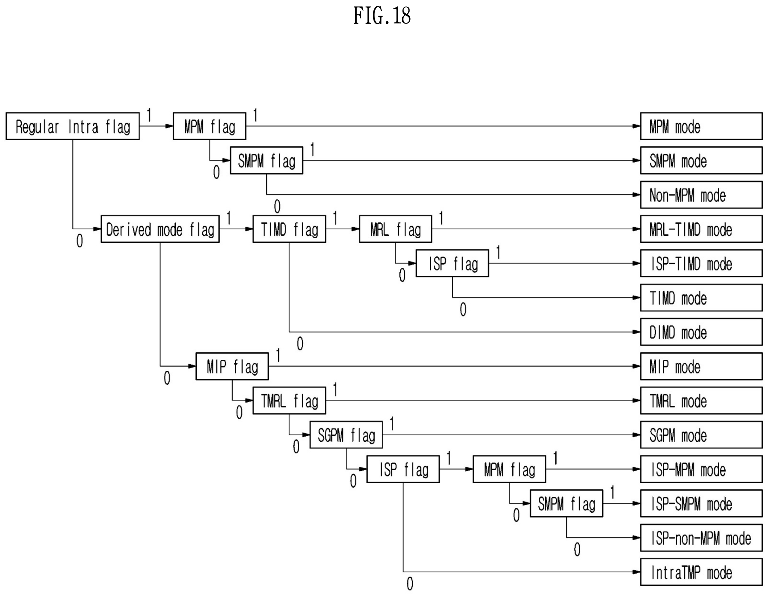

As another example, FIG. 18 is a diagram showing a signaling structure of intra prediction mode information according to an embodiment of the present disclosure, in which the derivation-based modes are grouped and signaled based on the signaling structure of FIG. 13.

According to FIG. 18, grouping intra prediction information (a grouping intra prediction flag) may be used to ensure that a MPM mode with the highest selection ratio among the intra prediction modes for a luma component according to Table 3 and SMPM and non-MPM modes with a high association with a MPM mode are signaled relatively preferentially. As an example, grouping intra prediction information may be a flag representing whether an intra prediction mode within a corresponding group is applied by grouping some intra prediction modes into one mode group. As an example, a regular intra flag may be included in grouping intra prediction information. For example, when the value of a regular intra flag is a specific value (e.g., 1, true), whether MPM, SMPM and non-MPM modes are applied may be determined sequentially through a MPM flag and a SMPM flag. As another example, when the value of a regular intra flag is a specific value (e.g., 0, false), a derived mode flag may be used so that decoder-side derivation-based modes may be grouped and signaled, and when the value of a derived mode flag is a specific value (e.g., 1, true), a TIMD flag, a MRL flag and an ISP flag may be signaled and whether MRL-TIMD, ISP-TIMD, TIMD and DIMD modes included in a derivation-based mode are applied may be determined. Meanwhile, as an example, when the value of a derived mode flag is a specific value (e.g., 0, false), the signaling order of the remaining modes excluding decoder-side derivation-based modes may be the same as the structure of FIG. 13.

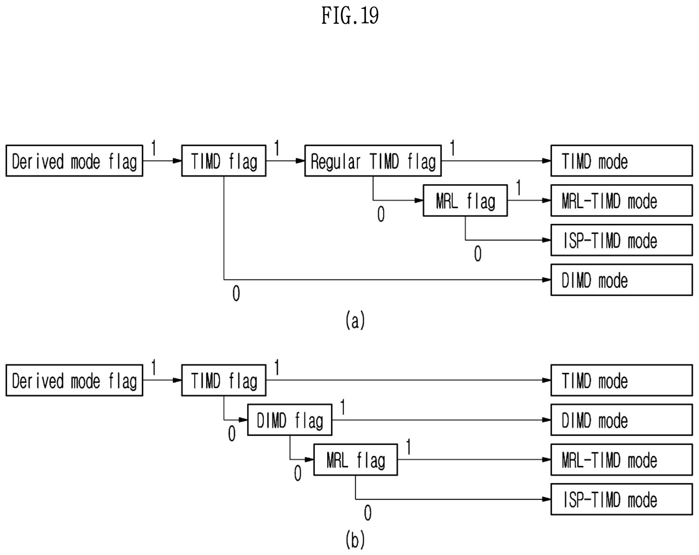

Meanwhile, as an example, in Table 3, when MRL-TIMD, ISP-TIMD, TIMD and DIMD modes configuring the derivation-based mode are checked, a selection ratio is high in the order of TIMD, DIMD, MRL-TIMD and ISP-TIMD. By reflecting this, information on a corresponding prediction mode may be rearranged to be signaled first in order of high selection ratio even within a derivation-based mode. Through this, compression efficiency may be improved by allocating relatively less information to a mode that is used more frequently. FIG. 19 is a diagram showing a signaling structure of intra prediction mode information according to an embodiment of the present disclosure.

According to FIG. 19(a), after being branched by decoder-side derivation-based mode information (e.g., branched according to the value of a decoder-side derivation-based mode), a TIMD flag may be signaled. Through this, a derivation-based mode of the TIMD series is distinguished first, and when the value of a TIMD flag is a specific value (e.g., 1, true), a regular TIMD flag and a MRL flag may be signaled. Through this, whether TIMD, MRL-TIMD and ISP-TIMD modes are applied may be sequentially determined in order of high selection ratio. Meanwhile, as an example, when the value of a TIMD flag is a specific value (e.g., 0), whether DIMD which is a derivation-based mode, not the TIMD series, is applied may be determined.

Meanwhile, according to FIG. 19(b), after being branched by the value of decoder-side derivation-based mode information, a TIMD flag, a DIMD flag and a MRL flag may be signaled. It, as an example, ensures that information that may determine whether TIMD, DIMD, MRL-TIMD and ISP-TIMD modes are applied in order of high selection ratio based on Table 3 above may be sequentially signaled.

Meanwhile, it will be obvious that when a method shown in FIG. 19 is used by being combined with a method shown in FIGS. 17 and 18, it is also included in an embodiment of the present disclosure. In addition, a method for grouping and signaling the decoder-side derivation-based modes described in this embodiment is described by using a case where it is applied to some drawings in the embodiment #1 as an example, but it may also be applied to the signaling structure of any intra prediction mode information for a luma component and a drawing referenced in embodiment #1 that are not used as an example, which is also considered included in the scope of the present disclosure.

According to the present disclosure, the amount of information required for signaling intra prediction information may be significantly reduced, improving coding efficiency.

## Embodiment #3

According to an embodiment of the present disclosure, specific intra prediction mode information may not be signaled according to a specific criterion. For example, information on a corresponding intra prediction mode may not be signaled according to the selection ratio of an intra prediction mode (e.g., an intra prediction mode where a selection ratio is less than or equal to a specific threshold value or the lowest intra prediction mode, etc.). In this case, it may be determined that a corresponding intra prediction mode is not applied.

As an example, according to the example of Table 3 above, a mode combined with sub-partition-based ISP and an intraTMP mode have the lowest selection ratio among the intra prediction modes for a luma component. On the other hand, the signaling of intra prediction mode information for distinguishing a mode combined with ISP and an intraTMP mode from other modes is located relatively higher in the entire intra prediction mode signaling structure, which may reduce the coding efficiency of modes with a high selection ratio. Accordingly, this embodiment proposes a method for reducing the amount of information required for signaling intra prediction mode information for a luma component by reconfiguring other modes excluding a mode combined with ISP and an intraTMP mode.

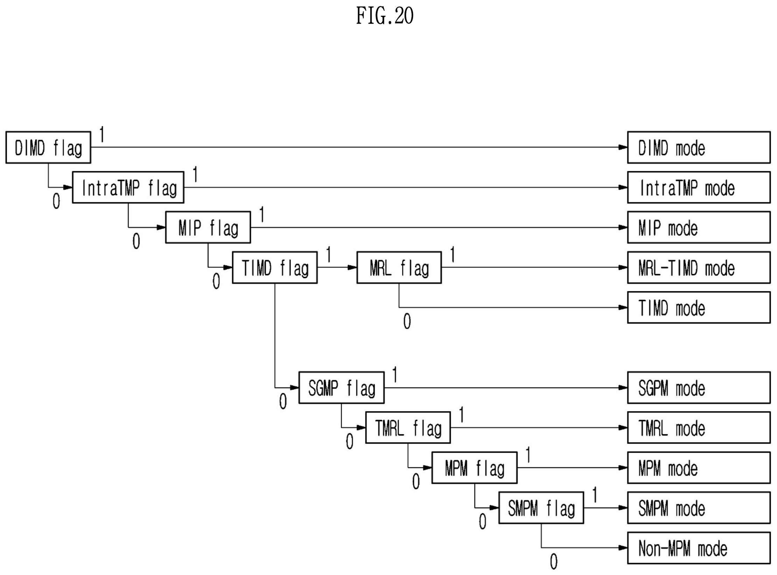

FIG. 20 is a diagram showing an example of a structure that does not signal information on a mode combined with ISP based on FIG. 12 above. An ISP flag signaled before determining whether a TIMD mode with the highest selection ratio excluding a MPM mode is applied is removed, so the amount of information required for selecting a TIMD mode may be reduced compared to FIG. 12, thereby improving the efficiency of intra prediction mode coding. In addition, when the value of a TMRL flag is a specific value (e.g., 0, false), an ISP flag is removed and not signaled, so the amount of information required for determining whether a MPM mode with the highest selection ratio and SMPM and non-MPM modes with a high association with a MPM mode are applied may be reduced compared to FIG. 12, thereby improving the efficiency of intra prediction mode coding.

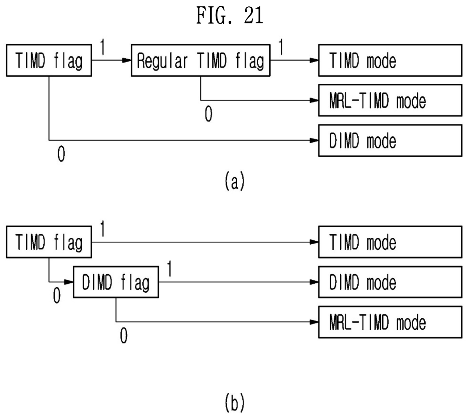

As another example, FIG. 21 is a diagram showing an example of a structure that does not signal information on a mode combined with ISP based on FIG. 19. Compared to FIG. 19, a MRL flag signaled before determining whether a MRL-TIMD mode is applied is removed, so the amount of information required for determining whether a MRL-TIMD mode is applied may be reduced compared to FIG. 19, thereby improving the efficiency of intra prediction mode coding.

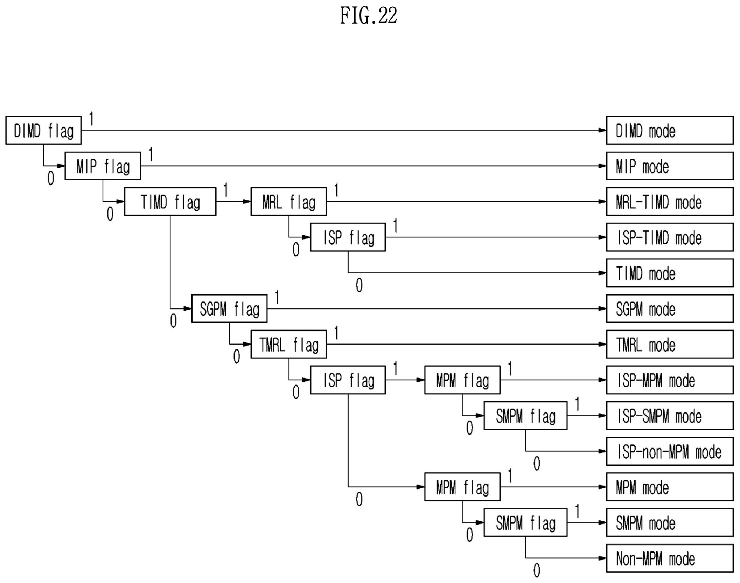

FIG. 22 is a diagram showing a signaling structure of intra prediction mode information according to an embodiment of the present disclosure, which is a diagram showing a signaling structure that does not signal information on an intraTMP mode based on FIG. 12, i.e., that does not apply an intraTMP mode. An intraTMP flag signaled before determining whether all other modes excluding a DIMD mode are applied is removed, so the amount of information required for determining whether all other modes excluding a DIMD mode and an intraTMP mode are applied may be reduced compared to FIG. 12, thereby improving the efficiency of intra prediction mode coding.

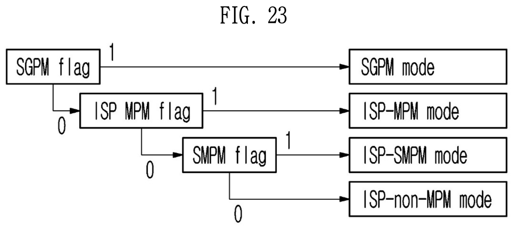

As another example, Fig. 23 is a diagram partially showing a signaling structure that does not signal information on whether an intraTMP mode is applied based on FIG. 13 or FIG. 18, i.e., that does not select an intraTMP mode. Compared to FIG. 13 and FIG. 18, an ISP flag signaled before determining whether ISP-MPM, ISP-SMPM and ISP-non-MPM modes are applied is removed, so the amount of information required for selecting a mode linked with the ISP may be reduced compared to FIG. 13 and FIG. 18, thereby improving the efficiency of intra prediction mode coding.

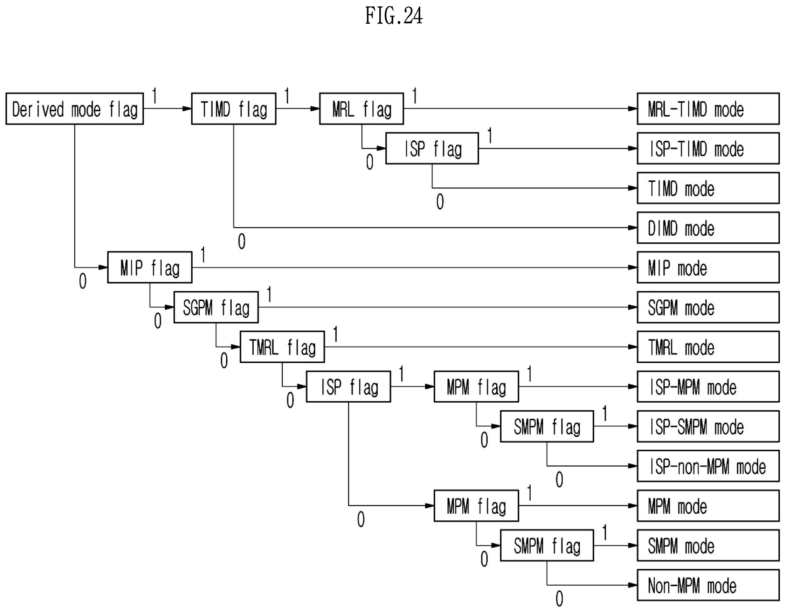

As another example, FIG. 24 shows a signaling structure that does not signal whether an intraTMP mode is applied based on FIG. 17, i.e., that does not apply an intraTMP mode. An intraTMP flag signaled before determining whether all other intra prediction modes excluding decoder-side derivation-based modes such as TIMD, DIMD, MRL-TIMD and ISP-TIMD are applied is removed, so the amount of information required for selecting all modes excluding decoder-side derivation-based modes and an intraTMP mode may be reduced compared to FIG. 17, thereby improving the efficiency of intra prediction mode coding.

Meanwhile, a plurality of methods for signaling other intra prediction mode information excluding information on an intra prediction mode combined with ISP proposed in this embodiment and a plurality of methods for excluding an intraTMP mode may be combined and used, and it is obvious that this is also included in the scope of the present disclosure.

Meanwhile, an intraTMP mode may be an effective method for improving the compression efficiency of the screen content compared to an image obtained through a camera due to its characteristic of using a reconstructed texture selected from an adjacent area based on a block to be currently coded as the prediction block of a current block. Accordingly, whether to use an intraTMP mode may be determined selectively according to its purpose, including disabling an intraTMP mode to reduce the amount of information required for signaling in an image obtained through a camera and enabling an intraTMP mode for the screen content to improve compression efficiency.

Whether an intraTMP mode is enabled may be notified by transmitting information through at least one of the higher parameter sets such as a SPS, a PPS, a VPS, a picture header and a slice header, or may be derived in the process of encoding/decoding an image without transmitting separate information. When the use of an intraTMP mode is disabled, the amount of information required for intra prediction mode coding may be reduced by utilizing methods proposed in this embodiment.

In addition, modes linked to ISP also have a relatively low selection ratio compared to other intra prediction modes, but may have a high selection ratio in an image with lots of textures located in a narrow area with strong directionality. Accordingly, like the intraTMP mode, the use of ISP-linked modes may be selectively determined.

Whether ISP-linked modes are enabled may be notified by transmitting information through at least one of the higher parameter sets such as a SPS, a PPS, a VPS, a picture header and a slice header, or may be derived in the process of encoding/decoding an image without transmitting separate information. When the use of ISP-linked modes is disabled, the amount of information required for intra prediction mode coding may be reduced by utilizing methods proposed in this embodiment.

Meanwhile, in the embodiment, there may be two cases where ISP-linked modes are used dependently on TIMD and where they are used by being combined with intra prediction modes divided into MPM, SMPM and non-MPM modes, and whether ISP-linked modes are used may be selectively determined commonly for each case, or whether an ISP mode is used may be selectively determined only for a specific case.

Meanwhile, this embodiment is written based on a selection ratio in Table 3, and it is described that the signaling of information for ISP and intraTMP modes with a relatively low selection ratio is excluded, but when a selection ratio is changed and the selection ratio of other intra prediction modes other than an ISP mode or an intraTMP mode is low, the signaling of information on other intra prediction modes may be excluded. As an example, when the selection ratio of a TIMD mode is the lowest, a TIMD mode application flag may not be signaled.

In this embodiment, a method for reconfiguring the signaling information on other modes excluding a mode combined with ISP and an intraTMP mode is described based on only some drawings of the other embodiments, but it is for the convenience of description, and it may also be applied to the signaling structure of any intra prediction mode information for the drawing and luma component of other embodiments that are not used as an example, which is also included in the scope of the present disclosure.

## Embodiment of Image Encoding/Decoding Method

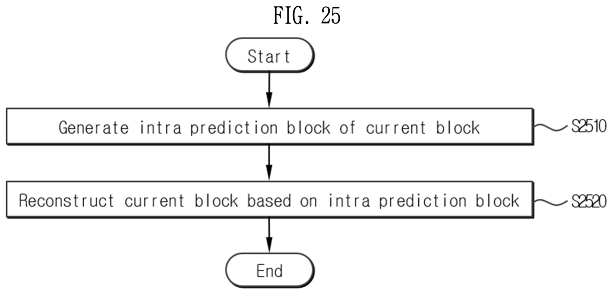

FIG. 25 is a diagram showing an image decoding method performed by an image decoding apparatus according to an embodiment of the present disclosure. As an example, an image decoding method in FIG. 25 may be based on embodiments #1, #2 and #3 described above.

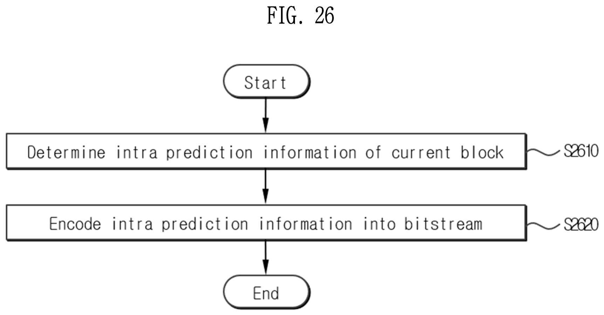

Meanwhile, FIG. 26 is a diagram showing an image encoding method performed by an image encoding apparatus according to an embodiment of the present disclosure. As an example, an image encoding method in FIG. 26 may also be based on embodiments #1, #2 and #3 described above.

First, when an image decoding method according to an embodiment of the present disclosure is described by referring to FIG. 25, the intra prediction block of a luma component block may be generated based on the intra prediction information of the luma component block of a current block S2510. As an example, intra prediction information may include information on an intra prediction mode, and may include information on whether an intra prediction mode is applied, i.e., an intra prediction mode application flag. When an intra prediction block is generated, a current block may be reconstructed based on an intra prediction block S2520. When reconstructing a current block by using an intra prediction block, a residual block may be further used. As an example, a current block may be reconstructed by adding an intra prediction block and a residual block.

When an image encoding method according to an embodiment of the present disclosure is described by referring to FIG. 26, the intra prediction information of the luma component block of a current block may be determined S2610. When intra prediction information is determined, intra prediction information may be encoded into a bitstream S2620. As an example, an intra prediction mode application flag representing whether a corresponding mode is applied for each intra prediction mode is included in intra prediction information, and a most probable mode (MPM) mode application flag and a template-based intra mode derivation (TIMD) mode application flag may be included in an intra prediction mode application flag. As an example, a MPM mode application flag may be signaled before a TIMD mode application flag.

Meanwhile, based on the embodiments #1, #2 and #3 of the present disclosure described above, an intra prediction mode application flag representing whether a corresponding mode is applied for each intra prediction mode may be included in intra prediction information, and a most probable mode (MPM) mode application flag, a template-based intra mode derivation (TIMD) mode application flag, etc. may be included in an intra prediction mode application flag. As an example, a MPM mode application flag may be signaled before a TIMD mode application flag. A grouping intra prediction mode flag representing whether an intra prediction mode within a mode group consisting of a specific intra prediction mode is applied may be further included in an intra prediction mode application flag, and an intra prediction mode application flag may be signaled based on the value of a grouping intra prediction mode flag. As an example, the number, type, etc. of intra prediction mode application flags signaled based on the value of a grouping intra prediction mode flag may be different. As an example, a regular intra flag or a derived mode flag, etc. described above may be included in a grouping intra prediction mode flag. Meanwhile, a derived mode flag may include a decoder-side derivation-based intra prediction mode. Here, a MRL mode or an ISP mode may be included in a decoder-side derivation-based intra prediction mode. Meanwhile, as an example, a TIMD mode application flag may be signaled based on a MPM mode application flag representing that a MPM mode is not applied. In other words, a TIMD mode application flag may be signaled when a MPM mode application flag is a specific value (e.g., 0). Meanwhile, as an example, a MPM mode application flag may be signaled before a decoder-side intra mode derivation (DIMD) mode application flag. Here, a DIMD mode application flag may be signaled based on a MPM mode application flag representing that a MPM mode is not applied. In other words, a DIMD mode application flag may be signaled when the value of a MPM mode application flag is a specific value (e.g., 0). As an example, an ISP mode application flag or an intraTMP mode application flag may not be included in an intra prediction mode application flag. In other words, an ISP mode or an IntraTMP mode may not always be applied when generating an intra prediction block.

As an example, a MPM mode application flag may be signaled before a MIP mode application flag. As an example, a MIP mode application flag may be signaled based on a MPM mode application flag representing that a MPM mode is not applied (e.g., a MPM mode application flag is a specific value (e.g., 0)). As an example, signaling order between intra prediction mode application flags may be determined in an encoder, but may also be determined by considering selection frequency, i.e., the frequency of use.

Meanwhile, since FIGS. 25 and 26 correspond to an embodiment of the present disclosure, some steps may be changed, added or deleted, which is also included in the scope of the present disclosure.

## Embodiment of Bitstream Transmission Method

According to an embodiment of the present disclosure, a bitstream generated by an image encoding method may be transmitted. A generated bitstream may be transmitted to an image decoding apparatus or an intermediate apparatus, etc. by an image encoding apparatus or a separate bitstream transmission apparatus, etc. As an example, a bitstream may be generated by an image encoding method shown in FIG. 26 based on embodiments #1, #2 and #3.

For example, as a method for transmitting a bitstream generated by an image encoding method, the image encoding method includes determining intra prediction information of a luma component block of a current block and encoding intra prediction information into a bitstream, wherein an intra prediction mode application flag representing whether a corresponding mode is applied for each intra prediction mode is included in intra prediction information, a most probable mode (MPM) mode application flag and a template-based intra mode derivation (TIMD) mode application flag are included in an intra prediction mode application flag, and a MPM mode application flag may be signaled before a TIMD mode application flag. In addition, since an embodiment including embodiments #1, #2 and #3 may be applied, an overlapping description thereof is omitted.

According to the present disclosure, coding efficiency may be improved by reconfiguring the signaling order of information representing whether an intra prediction mode is applied.

The exemplary methods of the present disclosure are described as a series of operations for clarity of explanation, but this is not intended to limit the order in which the steps are performed, and when necessary, each step may be performed simultaneously or in a different order. To implement the method according to the present disclosure, additional steps may be included in addition to the illustrated steps, some steps may be omitted while including the remaining steps, or some steps may be omitted while including additional steps.

In the present disclosure, the image encoding apparatus or the image decoding apparatus which performs a predetermined operation (step) may perform an operation (step) to check the execution conditions or situations of the corresponding operation (step). For example, when it is described that a predetermined operation is performed when a predetermined condition is satisfied, the image encoding apparatus or the image decoding apparatus may perform an operation to check whether the predetermined condition is satisfied before performing the predetermined operation.

The various embodiments of the present disclosure are not a listing of all possible combinations but are provided to illustrate representative aspects of the disclosure, and the elements described in the various embodiments may be applied independently or in combination with two or more elements.

Additionally, the various embodiments of the present disclosure may be implemented using hardware, firmware, software, or a combination thereof, etc. When implemented in hardware, the various embodiments may be implemented using one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), general-purpose processors, controllers, microcontrollers, or microprocessors.

Additionally, the image decoding apparatus and the image encoding apparatus to which the embodiments of the present disclosure are applied may be included in various devices such as a multimedia broadcasting transmission/reception device, a mobile communication terminal, a home cinema video device, a digital cinema video device, a surveillance camera, a video conferencing device, a real-time communication device such as a video communication device, a mobile streaming device, a storage medium, a camcorder, a video-on-demand (VoD) service providing device, an over-the-top (OTT) video device, an internet streaming service providing device, a three-dimensional (3D) video device, a video telephony device, and a medical video device, and may be used for processing video signals or data signals. For example, an over the top (OTT) video device may include a game console, a Blu-ray player, an internet-connected TV, a home theater system, a smartphone, a tablet PC, and a digital video recorder (DVR), etc.

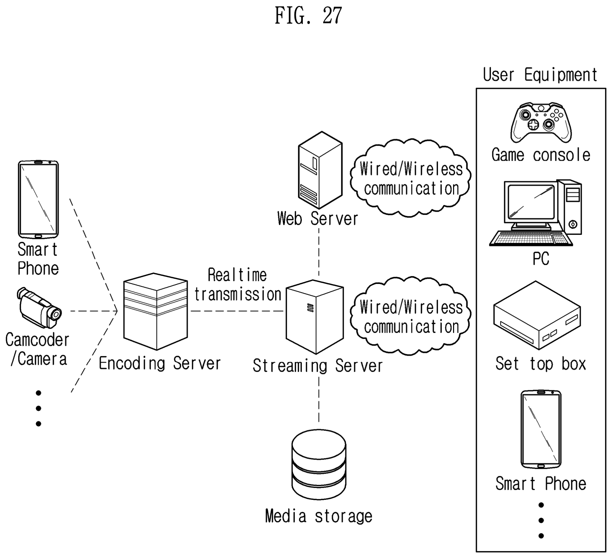

FIG. 27 shows an exemplary diagram of a content streaming system to which an embodiment of the present disclosure may be applied.

As shown in FIG. 27, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

**Claims**

1.  An image decoding method performed by an image decoding apparatus, comprising:

    based on intra prediction information of a luma component block of a current block, generating an intra prediction block of the luma component block; and
    reconstructing the current block based on the intra prediction block,
    wherein an intra prediction mode application flag representing whether a corresponding mode is applied for each intra prediction mode is included in the intra prediction information,
    wherein a most probable mode (MPM) mode application flag and a template-based intra mode derivation (TIMD) mode application flag are included in the intra prediction mode application flag, and
    wherein the MPM mode application flag is signaled before the TIMD mode application flag.

2.  The method of Claim 1, wherein the intra prediction mode application flag further includes a grouping intra prediction mode flag representing whether an intra prediction mode within a mode group consisting of specific intra prediction modes is applied, and
    wherein the intra prediction mode application flag is signaled based on a value of the grouping intra prediction mode flag.

3.  The method of Claim 2, wherein a decoder-side derivation-based intra prediction mode is included in the mode group.

4.  The method of Claim 2, wherein a MPM-based intra prediction mode is included in the mode group.

5.  The method of Claim 1, wherein the TIMD mode application flag is signaled based on the MPM mode application flag representing that a MPM mode is not applied.

6.  The method of Claim 1, wherein the MPM mode application flag is signaled before a decoder-side intra mode derivation (DIMD) mode application flag.

7.  The method of Claim 6, wherein the DIMD mode application flag is signaled based on the MPM mode application flag representing that a MPM mode is not applied.

8.  The method of Claim 1, wherein an intra sub-partitions (ISP) mode application flag or an intraTMP mode application flag is included in the intra prediction mode application flag according to whether an ISP mode or an intraTMP mode is enabled, indicated by a higher level parameter set.

9.  The method of Claim 1, wherein the MPM mode application flag is signaled before a MIP mode application flag.

10. The method of Claim 9, wherein the MIP mode application flag is signaled based on the MPM mode application flag representing that a MPM mode is not applied.

11. An image encoding method performed by an image encoding apparatus, comprising:

determining intra prediction information of a luma component block of a current block; and
encoding the intra prediction information into a bitstream,
wherein an intra prediction mode application flag representing whether a corresponding mode is applied for each intra prediction mode is included in the intra prediction information,
wherein a most probable mode (MPM) mode application flag and a template-based intra mode derivation (TIMD) mode application flag are included in the intra prediction mode application flag, and
wherein the MPM mode application flag is signaled before the TIMD mode application flag.

12. The method of Claim 11, wherein the intra prediction mode application flag further includes a grouping intra prediction mode flag representing whether an intra prediction mode within a mode group consisting of specific intra prediction modes is applied, and
wherein the intra prediction mode application flag is signaled based on a value of the grouping intra prediction mode flag.

13. The method of Claim 12, wherein a first mode group including a decoder-side derivation-based intra prediction mode or a second mode group including a MPM-based intra prediction mode is included in the mode group.

14. A computer-readable medium storing a bitstream generated by the image encoding method of Claim 11.

15. A method for transmitting a bitstream generated by an image encoding method, the image encoding method comprising:

determining intra prediction information of a luma component block of a current block; and
encoding the intra prediction information into a bitstream,
wherein an intra prediction mode application flag representing whether a corresponding mode is applied for each intra prediction mode is included in the intra prediction information,
wherein a most probable mode (MPM) mode application flag and a template-based intra mode derivation (TIMD) mode application flag are included in the intra prediction mode application flag, and
wherein the MPM mode application flag is signaled before the TIMD mode application flag.

FIG.1

## FIG.2

EP 4 648 407 A1

# FIG.3

FIG.4

```
                        ( START )
                            │
                            ▼
    ┌───────────────────────────────────────────────┐
    │            CONSTRUCT MPM LIST                  │──── S400
    └───────────────────────────────────────────────┘
                            │
                            ▼
    ┌───────────────────────────────────────────────┐
    │  DETERMINE INTRA PREDICTION MODE OF CURRENT BLOCK │──── S410
    └───────────────────────────────────────────────┘
                            │
                            ▼
    ┌───────────────────────────────────────────────┐
    │      ENCODE INTRA PREDICTION MODE INFORMATION  │
    │   (INCLUDING MPM FLAG, NOT PLANAR FLAG, MPM IDX │──── S420
    │  AND/OR REMAINING INTRA PREDICTION MODE INFORMATION) │
    └───────────────────────────────────────────────┘
                            │
                            ▼
                        (  END  )
```

FIG. 5

FIG. 6

FIG. 7

FIG. 8

reference line 3

reference line 2

reference line 1

top template

left template

Current block

# FIG.9

Intra_pred_mode0

Partition_mode

Intra_pred_mode1

```
If( cu_sgpm_flag )
{
  partition_mode_idx
  intra_pred_mode0_idx
  intra_pred_mode1_idx
}
```

Figure 1a

```
If( cu_sgpm_flag )
{
  sgpm_cand_idx
}
```

partition_mode_idx
intra_pred_mode0_idx
intra_pred_mode1_idx

Figure 1b

EP 4 648 407 A1

FIG. 10

FIG. 11

FIG.12

EP 4 648 407 A1

FIG.13

EP 4 648 407 A1

FIG.14

EP 4 648 407 A1

# FIG.15

FIG.16

## FIG.17

# FIG.18

EP 4 648 407 A1

## FIG.19

(a)

(b)

FIG.20

EP 4 648 407 A1

## FIG. 21

```
┌──────────┐  1   ┌──────────────────┐  1   ┌──────────────┐
│ TIMD flag├─────▶│ Regular TIMD flag├─────▶│ TIMD mode    │
└─────┬────┘      └─────────┬────────┘      └──────────────┘
      │                     │
      │                     │               ┌──────────────┐
      │                     └──────────────▶│ MRL-TIMD mode│
      │                     0                └──────────────┘
      │
      │                                     ┌──────────────┐
      └────────────────────────────────────▶│ DIMD mode    │
      0                                      └──────────────┘
```

(a)

```
┌──────────┐  1                            ┌──────────────┐
│ TIMD flag├──────────────────────────────▶│ TIMD mode    │
└─────┬────┘                                └──────────────┘
      │
      │      ┌──────────┐  1                ┌──────────────┐
      └─────▶│ DIMD flag├──────────────────▶│ DIMD mode    │
      0      └─────┬────┘                   └──────────────┘
                   │
                   │                        ┌──────────────┐
                   └───────────────────────▶│ MRL-TIMD mode│
                   0                         └──────────────┘
```

(b)

FIG.22

EP 4 648 407 A1

FIG. 23

FIG.24

EP 4 648 407 A1

FIG. 25

```
          ┌──────────┐
          │  Start   │
          └──────────┘
                │
                ▼
┌───────────────────────────────────────────────┐
│ Generate intra prediction block of current block│ ～ S2510
└───────────────────────────────────────────────┘
                │
                ▼
┌───────────────────────────────────────────────┐
│ Reconstruct current block based on intra prediction block│ ～ S2520
└───────────────────────────────────────────────┘
                │
                ▼
          ┌──────────┐
          │   End    │
          └──────────┘
```

# FIG. 26

Start

Determine intra prediction information of current block — S2610

Encode intra prediction information into bitstream — S2620

End

FIG. 27

## INTERNATIONAL SEARCH REPORT

| | International application No. |
|---|---|
| | **PCT/KR2024/000095** |

| A. | CLASSIFICATION OF SUBJECT MATTER |
|---|---|

**H04N 19/11**(2014.01)i; **H04N 19/593**(2014.01)i; **H04N 19/70**(2014.01)i

According to International Patent Classification (IPC) or to both national classification and IPC

| B. | FIELDS SEARCHED |
|---|---|

Minimum documentation searched (classification system followed by classification symbols)

H04N 19/11(2014.01); H04N 19/105(2014.01); H04N 19/119(2014.01); H04N 19/159(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인트라(intra), 예측(predict), 루마(luma), 성분(component), 복원 (reconstruct), 플래그(flag)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022-182174 A1 (LG ELECTRONICS INC.) 01 September 2022 (2022-09-01)<br>See paragraphs [0048]-[0049], [0070]-[0077], [0143]-[0145], [0151]-[0162], [0174], [0188]-[0193] and [0208]; claim 1; and figures 2 and 11. | 1-15 |
| Y | KR 10-2022-0159464 A (TENCENT AMERICA LLC) 02 December 2022 (2022-12-02)<br>See paragraphs [0001], [0103]-[0104] and [0137]. | 1-15 |
| A | US 2021-0368162 A1 (LG ELECTRONICS INC.) 25 November 2021 (2021-11-25)<br>See paragraphs [0169]-[0171]. | 1-15 |
| A | WO 2022-218316 A1 (BEIJING BYTEDANCE NETWORK TECHNOLOGY CO., LTD. et al.) 20 October 2022 (2022-10-20)<br>See claims 1 and 9. | 1-15 |
| A | KR 10-2020-0145749 A (ELECTRONICS AND TELECOMMUNICATIONS RESEARCH INSTITUTE et al.) 30 December 2020 (2020-12-30)<br>See claims 1-10. | 1-15 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 March 2024** | **08 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000095**

| Patent document cited in search report | | | Publication date (day/month/year) | Patent family member(s) | | | Publication date (day/month/year) |
|---|---|---|---|---|---|---|---|
| WO | 2022-182174 | A1 | 01 September 2022 | CN | 117178549 | A | 05 December 2023 |
| | | | | KR | 10-2023-0149297 | A | 26 October 2023 |
| KR | 10-2022-0159464 | A | 02 December 2022 | CN | 115462077 | A | 09 December 2022 |
| | | | | EP | 4107948 | A1 | 28 December 2022 |
| | | | | JP | 2023-527662 | A | 30 June 2023 |
| | | | | US | 2022-0345691 | A1 | 27 October 2022 |
| | | | | WO | 2022-232786 | A1 | 03 November 2022 |
| US | 2021-0368162 | A1 | 25 November 2021 | KR | 10-2020-0106982 | A | 15 September 2020 |
| | | | | KR | 10-2022-0133331 | A | 04 October 2022 |
| | | | | KR | 10-2024-0024300 | A | 23 February 2024 |
| | | | | KR | 10-2448401 | B1 | 28 September 2022 |
| | | | | US | 11317086 | B2 | 26 April 2022 |
| | | | | US | 11632544 | B2 | 18 April 2023 |
| | | | | US | 2022-0217333 | A1 | 07 July 2022 |
| | | | | US | 2023-0199176 | A1 | 22 June 2023 |
| | | | | WO | 2019-177429 | A1 | 19 September 2019 |
| WO | 2022-218316 | A1 | 20 October 2022 | CN | 117356090 | A | 05 January 2024 |
| KR | 10-2020-0145749 | A | 30 December 2020 | CN | 114342372 | A | 12 April 2022 |
| | | | | EP | 3989548 | A1 | 27 April 2022 |
| | | | | US | 2022-0312003 | A1 | 29 September 2022 |
| | | | | WO | 2020-256466 | A1 | 24 December 2020 |

Form PCT/ISA/210 (patent family annex) (July 2022)